# EUROPEAN PATENT APPLICATION

(11) **EP 4 614 185 A1**
(43) Date of publication of application: **10.09.2025**
(21) Application number: 22966105.3
(22) Date of filing: 22.11.2022
(51) Int. Cl.: G01S 7/484

(54) **OPTICAL SIGNAL PROCESSING APPARATUS, CHIP, LASER RADAR, AND TERMINAL**

(71) Applicant: Shenzhen Yinwang Intelligent Technologies Co., Ltd., Shenzhen, Guangdong 518129 (CN)
(72) Inventor: LI, Menglin, Shenzhen, Guangdong 518129 (CN); LIU, Tonghui, Shenzhen, Guangdong 518129 (CN); WANG, Wei, Shenzhen, Guangdong 518129 (CN); YU, Anliang, Shenzhen, Guangdong 518129 (CN); ZHANG, Huahong, Shenzhen, Guangdong 518129 (CN)
(74) Representative: Gill Jennings & Every LLP
(86) International application number: PCT/CN2022/133583
(87) International publication number: WO 2024/108406

(57) **Abstract**

Embodiments of this application provide an optical signal processing apparatus, a chip, a lidar, and a terminal, which may be applied to a detection field, an intelligent surveying and mapping field, an intelligent driving field, and the like. The optical signal processing apparatus includes a plurality of beam splitting units and a plurality of stages of amplification units, and signal light on a plurality of channels may be obtained by performing optical splitting on signal light from lasers through the plurality of beam splitting units. These pieces of signal light are amplified in a plurality of stages through the plurality of stages of amplification units, so that when a quantity of channels of output signal light is increased, power of the output signal light can be ensured, and detection performance can be improved.

## Description

### TECHNICAL FIELD

This application relates to optical devices, and in particular, to an optical signal processing apparatus, a chip, a lidar, and a terminal.

### BACKGROUND

A light detection and ranging technology is a technology for emitting detection signal light and obtaining related information of a target (for example, a characteristic quantity such as a location, a shape, or a speed of the target) by detecting signal light returned by the target. A coherent lidar is a radar that uses frequency modulated signal light to perform target detection, and performs processing based on an emitted signal and a returned signal to obtain related information of a target. The emitted signal of the coherent lidar is usually modulated in a specific form, so that a frequency of the emitted signal changes with time. A change rule of the frequency may be a sawtooth waveform, a triangular waveform, a sine waveform, or the like. If the frequency changes linearly and continuously, a wave is referred to as a linear frequency modulated continuous wave (Frequency Modulated Continuous Waves, FMCW). An FMCW lidar incorporates a laser linear frequency sweep and ranging technology. A ranging principle of the FMCW lidar is to measure round-trip time of transmission of light to a target, to obtain a target distance. To measure the round-trip time, time-related characteristic marking needs to be performed on emitted laser light. The linear frequency modulated continuous wave (FMCW) lidar modulates laser light by using the linear change of the frequency over time, to mark time-varying frequency information on an emitted signal.

Based on requirements for long-distance detection, a high frame rate, and a high point rate, and in consideration of conditions such as dimensions, costs, power consumption, and the like, one of key directions of the coherent lidar is multi-channel transmission and reception and high device integration. A lidar for multi-channel transmission and reception needs to emit detection signal light on a plurality of channels, to ensure a point rate.

There are two manners for emitting the detection signal light on the plurality of channels. One manner is to perform optical splitting on one light source, to obtain the detection signal light on the plurality of channels. However, this may limit light emitting power of each channel and result in poor detection performance. The other manner is to increase a quantity of light sources, to reduce a quantity of channels allocated to each light source. Consequently, because a plurality of light emitting sources are needed, costs of the coherent lidar are significantly increased.

### SUMMARY

Embodiments of this application provide an optical signal processing apparatus, a chip, a lidar, and a terminal, so that a quantity of channels and light emitting power of signal light can be ensured, and detection performance can be improved.

**According to a first aspect,** an embodiment of this application provides an optical signal processing apparatus. The optical signal processing apparatus includes at least one input port, a first beam splitting unit, a second beam splitting unit, and M stages of amplification units, where M is an integer and M≥2;
the at least one input port is configured to receive signal light from at least one laser;
the first beam splitting unit is configured to split the signal light from the at least one laser into a plurality of pieces of sub signal light;
a first-stage amplification unit in the M stages of amplification units is configured to amplify one of the plurality of pieces of sub signal light to generate first signal light;
the second beam splitting unit is configured to split the first signal light into a plurality of pieces of second signal light; and
a second-stage amplification unit in the M stages of amplification units is configured to amplify at least one of in the plurality of pieces of second signal light to generate third signal light.

In this application, signal light on a plurality of channels may be obtained by performing optical splitting on the signal light from the laser through the beam splitting unit. These pieces of signal light may pass through a plurality of stages of amplification units, and the plurality of stages of amplification units may perform amplification in a plurality of stages on the signal light, so that power of the output signal light is ensured, and detection performance is improved.

In addition, a working principle of the amplification unit is to obtain signal light with higher power by using a current. The plurality of stages of amplification units are disposed, so that a location of the amplification unit and a drive current of each amplification unit can be flexibly designed, to avoid an excessively large current of a specific amplification unit. On one hand, this can reduce a risk of burning out electrical devices due to an excessively large current, and reduce a heat dissipation requirement. On the other hand, this can reduce crosstalk caused by a large current, reduce noise and interference, and improve signal light effectiveness. In conclusion, a service life of the optical signal processing apparatus can be prolonged through the plurality of stages of amplification units, and detection performance can be significantly improved.

**In a possible implementation of the first aspect,** the plurality of pieces of sub signal light include local oscillation signal light and detection signal light; and
the first-stage amplification unit is configured to amplify the detection signal light to generate the first signal light.

The local oscillation signal light is used to be frequency-mixed with return signal light subsequently to obtain a beat frequency signal. The detection signal light is emitted to space for detection.

It may be understood that the local oscillation signal light is usually transmitted inside the optical signal processing apparatus, and an energy loss is small. However, an energy loss in a process in which the signal light is emitted to the space and then the return signal light is received is large. In this implementation, the first-stage amplification unit is mainly configured to amplify the detection signal light, so that power of the detection signal light can be accurately increased, and detection performance can be improved.

**In a possible implementation of the first aspect,** in the plurality of pieces of second signal light, a part of pieces of second signal light are used as the local oscillation signal light, and another part of pieces of second signal light are used as the detection signal light; and the second-stage amplification unit is configured to amplify the detection signal light to generate third signal light.

In this implementation, the second-stage amplification unit is mainly configured to amplify the detection signal light, so that power of the detection signal light can be accurately increased, and detection performance can be improved.

In addition, the local oscillation signal light may need to be transmitted to a frequency mixing unit to be frequency-mixed with the return signal light, and the return signal light also has a plurality of channels. Consequently, crosstalk may occur between the plurality of pieces of return signal light and optical paths of the plurality of pieces of detection signal light. However, in this implementation, the local oscillation signal light and the detection signal light are separated in the beam splitting unit at the back, so that the local oscillation signal and the detection signal light are interleaved, the return signal light does not need to pass through the detection signal light for frequency mixing, transmission crosstalk between the signal light can be reduced, and signal effectiveness can be improved.

**In a possible implementation of the first aspect,** the optical signal processing apparatus further includes a beam combining unit, and the at least one input port includes a first input port and a second input port;
the first input port is configured to receive signal light from a first laser, and the second input port is configured to receive signal light from a second laser;
the first beam splitting unit is configured to split the signal light from the first laser into a plurality of pieces of fourth signal light, and split the signal light from the second laser into a plurality of pieces of fifth signal light, where the plurality of pieces of fifth signal light belongs to the plurality of pieces of sub signal light;
the beam combining unit is configured to combine at least one piece of fourth signal light and at least one piece of fifth signal light to obtain sixth signal light; and
the first-stage amplification unit is configured to amplify the sixth signal light to generate the first signal light.

In this implementation, the optical signal processing apparatus is also applicable to processing signal light from a plurality of lasers. The foregoing uses only the first laser and the second laser as an example. Beam combining may be performed on a part of signals in the signal light from the plurality of lasers. In a process of emitting signal light on which beam combining is performed, as emitting signal light of a single light source, cross can be avoided, and crosstalk can be reduced.

Optionally, the signal light emitted by the plurality of lasers has different properties. When the return signal light is processed, beam splitting is first performed on the return signal light, and then the return signal light is frequency-mixed with respective local oscillation signal light from the two lasers, so that a plurality of sampling points can be obtained by using a return signal of one channel. For example, the first laser and the second laser may respectively emit linear frequency modulated laser light with a positive slope and linear frequency modulated laser light with a negative slope. After beam combining is performed, detection signal light on one channel includes the linear frequency modulated laser light with a positive slope and the linear frequency modulated laser light with a negative slope. The detection signal light on the channel is irradiated to a same point of a target. After beam splitting is performed on the return signal light, the return signal light is separately frequency-mixed with the local oscillation signal light of the linear frequency modulated laser light with a positive slope and the linear frequency modulated laser light with a negative slope, to obtain two sampling points, so that a point rate can be improved, and a lidar is enabled to obtain a higher point cloud resolution.

**In a possible implementation of the first aspect,** the signal light from the first laser and the signal light from the second laser have different frequency sweep slopes.

**In a possible implementation of the first aspect,** the signal light from the first laser and the signal light from the second laser have different center wavelengths.

Optionally, beam splitting performed on the return signal light may be demultiplexing, to separate return signal light corresponding to different lasers.

For example, the first laser and the second laser have different center wavelengths. The first laser emits laser light of 1550 nm, and the second laser emits laser light of 1310 nm. A beam splitting unit configured to separate the return signal light may separate 1550-nm laser light in the return signal light and 1310-nm laser light in the return signal light, the 1550-nm laser light in the return signal light is frequency-mixed with local oscillation signal light from the first laser, and the 1310-nm laser light in the return signal light is frequency-mixed with local oscillation signal light from the second laser. In this manner, not only a point rate can be improved, but also an energy loss can be reduced.

**In a possible implementation of the first aspect,** the second beam splitting unit includes N beam splitters, the N beam splitters are arranged in a tree topology, each beam splitter is used as a node of the tree topology, N is an integer and N>0, and signal light obtained through beam splitting by a beam splitter at each parent node location is provided for a beam splitter at a child node location; and
the first signal light is input into a beam splitter at a root node location, and the plurality of pieces of second signal light are output from a beam splitter at a leaf node location.

Optionally, the beam splitter may be a one-to-M (where M is an integer and M>1) beam splitter, for example, a one-to-two beam splitter or a one-to-three beam splitter. A tree-shaped beam splitter structure is used, so that energy distribution of a signal on which optical splitting is performed can be controlled, to flexibly design resolution distribution.

In a possible implementation, a quantity of levels of beam splitters through which signal light projected into a center part of a field of view passes is less than a quantity of levels of beam splitters through which signal light projected into an edge part of the field of view passes. In this way, power of the signal light projected into the center part of the field of view is higher than power of the signal light projected into the edge region of the field of view, so that the lidar has a higher resolution and higher detection accuracy in the center part of the field of view.

**In a possible implementation of the first aspect,** the second-stage amplification unit includes a plurality of amplifiers; and
the plurality of amplifiers are located after the beam splitter at the leaf node location.

It should be understood that, "after" herein is after an output end of the beam splitter at the leaf node location.

In this implementation, the amplifier is disposed after the second beam splitting unit, and the signal light is input into the amplifier after optical splitting is performed on the signal light, so that power of the third signal light can be more accurately controlled, and stability of the detection signal light can be improved.

**In a possible implementation of the first aspect,** the plurality of amplifiers are located between beam splitters in the plurality of tree topologies.

In this implementation, after passing through the second-stage amplification unit, the signal light is further optically split again, which is equivalent to that several pieces of signal light may share one amplifier, so that a quantity of amplifiers can be reduced, and costs can be saved.

**In a possible implementation of the first aspect,** in the plurality of amplifiers, a part of amplifiers are located after the beam splitter at the leaf node location, and another part of amplifiers are located between beam splitters in the plurality of tree topologies.

In this implementation, a user can set a location of the amplifier as required, and control power of the detection signal light, to improve flexibility of an optical path design and a power design.

**In a possible implementation of the first aspect,** the optical signal processing apparatus further includes a power controller, and the power controller is configured to adjust a drive current of the second-stage amplification unit, to control power of signal light output by the second-stage amplification unit.

In this implementation, a characteristic that output power of the amplifier is related to the drive current is used, and the drive current of the amplification unit is changed, so that the power of the signal light passing through the amplification unit can be controlled, thereby improving flexibility and reducing energy consumption.

**In a possible implementation of the first aspect,** the power controller is further configured to:
adjust the drive current of the second-stage amplification unit based on a control signal, where the control signal is related to a pointing angle of a scanner.

For example, emitting power is increased in a center field of view, and emitting power is decreased in an edge field of view.

For another example, in a scanning invalid region in which an emitting light beam cannot be emitted by the scanner, an optical power amplification function of the amplification unit is implemented. The scanning invalid region is a scanning angle at which the detection signal light cannot be completely projected into the field of view. In this case, the detection signal may be projected into the apparatus.

In this implementation, a measurement dynamic range of a lidar system can be increased, overall power consumption can be reduced, and stray light inside the system can also be reduced.

Optionally, the control signal may be from a processor or a controller.

**In a possible implementation of the first aspect,** the optical signal processing apparatus further includes an optical input/output unit, and the optical input/output unit includes a plurality of output ports and a plurality of receiving ports;
the plurality of output ports are configured to output the third signal light;
the plurality of receiving ports are configured to receive return signal light, where the return signal light includes reflection of the third signal light;
a frequency mixing unit is configured to obtain one or more frequency mixing results based on the return signal light and the local oscillation signal light, where the one or more frequency mixing results are used to determine related information of a target in a field of view; and
the local oscillation signal light belongs to the plurality of pieces of sub signal light, or belongs to the plurality of pieces of second signal light.

In this implementation, the optical signal processing apparatus may further perform frequency mixing processing on the return signal light to obtain a frequency mixing result. In this way, device integration can be further implemented, device stability can be improved, and a volume can be reduced.

**In a possible implementation of the first aspect,** the frequency mixing unit includes a third beam splitting unit, a first frequency mixer, and a second frequency mixer;
the third beam splitting unit is configured to perform beam splitting on the return signal light, to obtain first sub return signal light and second sub return signal light;
the first frequency mixer is configured to perform frequency mixing on first sub local oscillation signal light and the first sub return signal light to obtain a first frequency mixing result, where the first sub local oscillation signal light is from the first laser; and
the second frequency mixer is configured to perform frequency mixing on a second sub local oscillation signal and the second sub return signal light to obtain a second frequency mixing result, where the second sub local oscillation signal light is from the second laser.

In this implementation, beam splitting may be performed on one piece of return signal light to obtain a plurality of pieces of sub return signal light, to obtain a plurality of output points by performing beat frequency based on the plurality of pieces of local oscillation signals, improve the point rate, and improve the higher point cloud resolution.

Optionally, the third beam splitting unit may be a beam splitting unit for energy beam splitting or a beam splitting unit for wavelength beam splitting.

**In a possible implementation of the first aspect,** the optical signal processing apparatus further includes a fourth beam splitting unit, the fourth beam splitting unit is configured to demultiplex the local oscillation signal light to obtain the first sub local oscillation signal light and the second sub local oscillation signal light, where the first sub local oscillation signal light is used as a local oscillation signal of the signal light from the first laser, and the second sub local oscillation signal light is used as a local oscillation signal of the signal light from the second laser; and
the local oscillation signal light includes the signal light from the first laser and the signal light from the second laser.

Optionally, the fourth beam splitting unit may be a beam splitting unit for energy beam splitting or a beam splitting unit for wavelength beam splitting.

**In a possible implementation of the first aspect,** the plurality of receiving ports are arranged by column to form a receiving port group, and the plurality of output ports are arranged by column to form an output port group; and
the receiving port group and the output port group are disposed opposite to each other, and one output port and at least one receiving port are disposed opposite to each other and share one optical transceiver module.

**In a possible implementation of the first aspect,** the plurality of receiving ports are arranged by column to form a receiving port group, and the plurality of output ports are arranged by column to form an output port group; and
the receiving port group shares one optical receiving module, and the output port group shares one optical emitting module.

**In a possible implementation of the first aspect,** in the output port group, a spacing between output ports in a middle part is less than a spacing between output ports in an edge part.

**In a possible implementation of the first aspect,** the plurality of receiving ports include a first receiving port, the output ports include a first output port, and signal light received by the first receiving port includes reflection of signal light output by the first output port; and
the optical signal processing apparatus further includes the power controller, and the power controller is configured to:
when power of the signal light received by the first receiving port is greater than a first threshold, reduce the drive current of the second-stage amplification unit to reduce power of detection signal light emitted by the first output port; or
when power of the signal light received by the first receiving port is less than a second threshold, increase the drive current of the second-stage amplification unit to increase power of detection signal light emitted by a first emitting subport.

**In a possible implementation of the first aspect,** the optical input/output unit includes a first output port set and a second output port set, the first output port set and the second output port set each include at least one output port, the first output port set is configured to emit detection signal light to a middle region of the field of view, and the second output port set is configured to emit detection signal light to an edge region of the field of view; and
power of the detection signal light emitted by the first output port set is higher than power of the detection signal light emitted by the second output port set.

**In a possible implementation of the first aspect,** the optical signal processing apparatus further includes an optical switch, and the optical switch is disposed between the second beam splitting unit and any output port, and is configured to control whether to form an optical path between the second beam splitting unit and the any output port.

**In a possible implementation of the first aspect,** the optical signal processing apparatus further includes a feedback unit, and the plurality of pieces of sub signal light include feedback signal light; and
the feedback unit is configured to detect, based on the feedback signal, frequency sweep information and/or phase noise of the signal light from the at least one laser.

**In a possible implementation of the first aspect,** the optical signal processing apparatus further includes a multi-layer substrate and a plurality of waveguides, and the plurality of waveguides are configured to form, at different layers of the substrate, optical paths for transmitting signal light.

**In a possible implementation of the first aspect,** optical paths for transmitting the local oscillation signal light and the return signal light are located at different layers of the substrate.

**In a possible implementation of the first aspect,** optical paths for transmitting the feedback signal light and the return signal light are located at different layers of the substrate.

**According to a second aspect,** an embodiment of this application provides a chip. The chip includes one or more optical signal processing apparatuses, and the optical signal processing apparatus is the optical signal processing apparatus according to any implementation in the first aspect.

For ease of description, the following uses an example in which the chip includes K optical signal processing apparatuses for description, where K is an integer and K≥1.

**In a possible implementation of the second aspect,** the chip further includes at least one laser input port and at least one optical switch, and the at least one laser input port includes a first laser input port;
the at least one laser input port is configured to receive signal light from at least one laser; and
the at least one optical switch is disposed between the first laser input port and L optical signal processing apparatuses, and is configured to: switchably couple the L optical signal processing apparatuses to optical paths, to control whether to form optical paths between the L optical signal processing apparatuses and the first laser input port, where L is an integer and L≤K.

In this implementation, an optical route may be formed between a plurality of optical signal processing apparatuses through the at least one optical switch, so that one or more optical signal processing apparatuses can be enabled as required, thereby improving flexibility.

**In a possible implementation of the second aspect,** K≥2, and any two of the K optical signal processing apparatuses are symmetrically disposed.

**According to a third aspect,** an embodiment of this application provides a lidar. The lidar includes a laser, a scanner, and the optical signal processing apparatus according to any implementation in the first aspect;
the laser is configured to provide frequency modulated signal light for the optical signal processing apparatus; and
the scanner is configured to project third signal light from the optical signal processing apparatus into a field of view.

**According to a fourth aspect,** an embodiment of this application provides a lidar, a laser, an array detector, an optical transceiver module, a scanner, and the optical signal processing apparatus according to any implementation in the first aspect;
the laser is configured to provide frequency modulated signal light for the optical signal processing apparatus;
the scanner is configured to: project third signal light from the optical signal processing apparatus into a field of view, receive return signal light from the field of view, and provide the return signal light for the optical signal processing apparatus;
the optical transceiver module is disposed between the scanner and the optical signal processing apparatus; and
the array detector is configured to: receive one or more frequency mixing results from the optical signal processing apparatus, and obtain an electrical signal based on the one or more frequency mixing results, where the electrical signal is used to determine related information of a target in the field of view.

**In a possible implementation of the fourth aspect,** the optical module includes a polarization beam splitter and a quarter wave plate, and the polarization beam splitter and the quarter wave plate are configured to implement coaxial transmission and reception;
the third signal light sequentially passes through an output port of the optical signal processing apparatus, the polarization beam splitter, and the quarter wave plate, and is provided for the scanner; and
return signal light from the scanner sequentially passes through the quarter wave plate and the polarization beam splitter, and is provided for a receiving port of the optical signal processing apparatus.

**In a possible implementation of the fourth aspect,** the optical module further includes a half wave plate, and the half wave plate is disposed between the polarization beam splitter and the receiving port of the optical signal processing apparatus.

**According to a fifth aspect,** an embodiment of this application provides a terminal. The terminal includes the optical signal processing apparatus described in any implementation in the first aspect, or the terminal includes the chip described in any implementation in the second aspect, or the terminal includes the lidar described in any implementation in the third aspect or any implementation in the fourth aspect.

Optionally, the terminal is a vehicle, an uncrewed aerial vehicle, or a robot.

### BRIEF DESCRIPTION OF DRAWINGS

The following briefly describes accompanying drawings used in descriptions of embodiments.
FIG. 1 is a diagram of a working principle of an amplifier;
FIG. 2 is a diagram of a structure of an optical signal processing apparatus according to an embodiment of this application;
FIG. 3 is a diagram of a structure of another optical signal processing apparatus according to an embodiment of this application;
FIG. 4 is a diagram of a structure of another optical signal processing apparatus according to an embodiment of this application;
FIG. 5 is a diagram of a structure of another possible optical signal processing apparatus according to an embodiment of this application;
FIG. 6A is a diagram of a structure of another possible optical signal processing apparatus according to an embodiment of this application;
FIG. 6B is a diagram of a slope of signal light from a plurality of lasers according to an embodiment of this application;
FIG. 7A is a diagram of a structure of another signal processing apparatus according to an embodiment of this application;
FIG. 7B is a diagram of a structure of another signal processing apparatus according to an embodiment of this application;
FIG. 7C is a diagram of a structure of another optical signal processing apparatus according to an embodiment of this application;
FIG. 7D is a diagram of a structure of another possible optical signal processing apparatus according to an embodiment of this application;
FIG. 8A is a diagram of a structure of another optical signal processing apparatus according to an embodiment of this application;
FIG. 8B is a diagram of a structure of another optical signal processing apparatus according to an embodiment of this application;
FIG. 8C is a diagram of a structure of another optical signal processing apparatus according to an embodiment of this application;
FIG. 8D is a diagram of a structure of another optical signal processing apparatus according to an embodiment of this application;
FIG. 9A is a diagram of another optical signal processing apparatus according to an embodiment of this application;
FIG. 9B is a diagram of another optical signal processing apparatus according to an embodiment of this application;
FIG. 10A is a diagram of a structure of another possible optical signal processing apparatus according to an embodiment of this application;
FIG. 10B is a diagram of a structure of another possible optical signal processing apparatus according to an embodiment of this application;
FIG. 10C is a diagram of a structure of another possible optical signal processing apparatus according to an embodiment of this application;
FIG. 10D is a diagram of a structure of another possible optical signal processing apparatus according to an embodiment of this application;
FIG. 11A is a diagram of a structure of another possible optical signal processing apparatus according to an embodiment of this application;
FIG. 11B is a diagram of a structure of another possible optical signal processing apparatus according to an embodiment of this application;
FIG. 11C is a diagram of a structure of another possible optical signal processing apparatus according to an embodiment of this application;
FIG. 11D is a diagram of a structure of another possible optical signal processing apparatus according to an embodiment of this application;
FIG. 12A is a diagram in which a receiving port and an output port are disposed opposite to each other according to an embodiment of this application;
FIG. 12B is a diagram of an optical path according to an embodiment of this application;
FIG. 12C is a diagram in which a receiving port and an output port are disposed opposite to each other according to an embodiment of this application;
FIG. 13A is another diagram in which a receiving port and an output port are disposed opposite to each other according to an embodiment of this application;
FIG. 13B is a diagram of another optical path according to an embodiment of this application;
FIG. 14 is another diagram of an output port and a receiving port according to an embodiment of this application;
FIG. 15A is a diagram of an output port according to an embodiment of this application;
FIG. 15B is a diagram of a possible output port according to an embodiment of this application;
FIG. 16 is a diagram of off-axis optical paths according to an embodiment of this application;
FIG. 17 is a diagram of coaxial optical paths according to an embodiment of this application;
FIG. 18 is a diagram of an optical switch according to an embodiment of this application;
FIG. 19 is a diagram of another optical switch according to an embodiment of this application;
FIG. 20 is a diagram of a possible feedback unit according to an embodiment of this application;
FIG. 21 is an application diagram of a possible optical signal processing apparatus according to an embodiment of this application;
FIG. 22 is an application diagram of another possible optical signal processing apparatus according to an embodiment of this application;
FIG. 23 is an application diagram of another optical signal processing apparatus according to an embodiment of this application;
FIG. 24 is an application diagram of another optical signal processing apparatus according to an embodiment of this application;
FIG. 25 is an application diagram of another optical signal processing apparatus according to an embodiment of this application;
FIG. 26 is an application diagram of another optical signal processing apparatus according to an embodiment of this application;
FIG. 27 is an application diagram of another optical signal processing apparatus according to an embodiment of this application;
FIG. 28 is an application diagram of another optical signal processing apparatus according to an embodiment of this application;
FIG. 29 is an application diagram of another optical signal processing apparatus according to an embodiment of this application;
FIG. 30 is an application diagram of another optical signal processing apparatus according to an embodiment of this application;
FIG. 31 is a diagram of a possible silicon photonics chip according to an embodiment of this application;
FIG. 32 is a diagram of another possible silicon photonics chip according to an embodiment of this application;
FIG. 33 is a diagram of a working scenario of an optical signal processing apparatus according to an embodiment of this application;
FIG. 34 is a diagram of a working scenario of another optical signal processing apparatus according to an embodiment of this application;
FIG. 35 is a diagram of a working scenario of another optical signal processing apparatus according to an embodiment of this application;
FIG. 36 is a diagram of a structure of a lidar according to an embodiment of this application; and
FIG. 37 is a diagram of a working scenario of a lidar according to an embodiment of this application.

### DESCRIPTION OF EMBODIMENTS

To make objectives, technical solution, and advantages of embodiments of this application clearer, the following further describes embodiments of this application in detail with reference to the accompanying drawings.

For ease of understanding, some concepts related to embodiments of this application are described below for reference by using examples. Details are as follows:

### 1. Detection apparatus

The detection apparatus mentioned in embodiments of this application may be a lidar, or may be another light detection apparatus, for example, a fusion detection apparatus (for example, a detection apparatus that integrates a radar detector and an image sensor). A working principle of the detection apparatus is to detect a corresponding detection region by emitting detection signal light and receiving returned signal light.

The detection apparatus in embodiments of this application can be used in various fields such as intelligent driving, intelligent transportation, intelligent manufacturing, environment detection, mapping, and uncrewed aerial vehicles, and can implement one or more functions of target detection, distance measurement, speed measurement, target tracking, imaging recognition, and the like.

The detection apparatus in embodiments of this application may be used in a vehicle-mounted detection apparatus (for example, a vehicle-mounted radar), a roadside detection apparatus (for example, an intersection radar), or the like, or may be used in another detection apparatus, for example, a detection apparatus installed on an apparatus such as an uncrewed aerial vehicle, a robot, a rail vehicle, a bicycle, a signal light, a speed measurement apparatus, or a base station. An installation location of the detection apparatus is not limited in this application.

### 2. Waveguide

The waveguide (waveguide) is a structure used to guide an electromagnetic wave in a directional manner, and the electromagnetic wave may be transmitted between ends of the waveguide. Light is also an electromagnetic wave, and a waveguide for transmitting light is referred to as an optical waveguide, for example, a planar dielectric optical waveguide or an optical fiber.

### 3. Polarization (polarization)

The polarization means that a vibration direction of an electric vector of light has a specific rule. The polarization is an attribute of the light, and a polarization state (polarization state) is a parameter for the light. The polarization state may be divided into linear polarization, elliptical polarization (including circular polarization), and the like.

For example, an electric vector of linearly polarized light vibrates back and forth in one direction. However, an electric vector of non-polarized light, such as natural light, vibrates with no rules. The electric vector does not vibrate in a same direction, and there is no fixed time correspondence (no fixed phase) during vibration. Therefore, the non-polarized light vibrates randomly and with no fixed rule.

### 4. Polarization beam splitter

The polarization beam splitter is an optical filter. A transmittance of signal light passing through the polarization beam splitter is related to a polarization direction of the signal light. Generally, linearly polarized light in a specific polarization direction can pass through, and light in some specific polarization directions is blocked (cannot pass through).

In some scenarios, when light passes through the polarization beam splitter, a polarization state of the light is described by using P-polarized light (P light for short below) and S-polarized light (S light for short below). The P light represents linearly polarized light whose polarization direction is parallel to a polarization direction of the beam splitter, and the S light represents linearly polarized light whose polarization direction is perpendicular to the polarization direction of the beam splitter.

In some other scenarios, the polarization state of the light is alternatively described by using transverse electric (transverse electric, TE) or transverse magnetic (transverse magnetic, TM). In a possible design, TE-polarized light may pass through the polarization beam splitter when passing through the polarization beam splitter, and the passed-through signal light still maintains TE polarization. TE polarization may be converted into circularly polarized light or elliptically polarized light after passing through a quarter wave plate (quarter wave plate, QWP) once, the circularly polarized light or the elliptically polarized light is converted into TM-polarized light after passing through the quarter wave plate again, and the TM-polarized light is reflected when passing through the polarization beam splitter.

### 5. Wave plate

The wave plate is also referred to as a phase delay plate, can enable two mutually orthogonal polarization components of light passing through the wave plate to generate a phase shift, and may be used for adjusting the polarization state of the light. According to the phase shift delayed by the wave plate, the wave plate can be divided into a half wave plate (half wave plate, HWP), a QWP, an eighth wave plate, and the like.

Optionally, the QWP shown in some embodiments of this application may be replaced with one or more of a Faraday rotator mirror, a combination of a Faraday rotator mirror and a wave plate, a combination of a quarter wave plate and a half wave plate, a combination of two eighth wave plates, or the like.

### 6. Field of view (field of view, FOV)

The field of view means a range that can be detected by a detection apparatus, and is also referred to as a field of view. In some scenarios, a line of sight (line of sight, LOS) region in which signal (for example, radio wave or laser light) transmission is not interrupted needs to be between an emitting end of the detection apparatus and a target object and/or between a receiving end of the detection apparatus and a target object. The line of sight region may be understood as the field of view.

### 7. Optical amplifier

The optical amplifier is an apparatus for amplifying signal light, and is an amplifier for short. A principle of the amplifier is basically based on laser light stimulated radiation. The amplifier converts other energy into energy of the signal light, to implement an amplification function.

The amplifier includes but is not limited to a semiconductor amplifier, an optical fiber amplifier, or the like. A semiconductor amplifier (semiconductor optical amplifier, SOA) uses a semiconductor material as a gain medium, and can amplify power of the signal light without significantly reducing an optical index of the signal light.

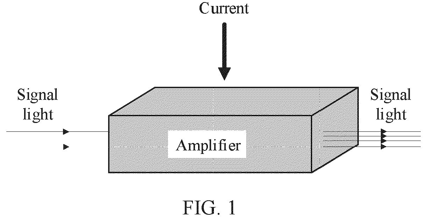

FIG. 1 is a diagram of a working principle of an amplifier. After a drive current is input into the amplifier, when signal light passes through the amplifier, an electron loses energy in a form of a photon, to generate an excited photon. The excited photon has a same wavelength (and another characteristic) as an optical signal.

The semiconductor amplifier is used as an example. A working principle of the semiconductor amplifier is that a drive current converts a semiconductor carrier into a reversal particle, so that an amplitude of injected seed light is amplified, and basic physical characteristics such as polarization, a line width, and a frequency of the injected seed light are maintained. As the drive current increases, output optical power also increases in a function relationship. Therefore, the SOA is used, so that the power of the signal light can be amplified without significantly changing an optical property of the signal light.

### 8. Frequency modulated continuous wave (frequency modulated continuous wave, FMCW)

The FMCW is an electromagnetic wave whose frequency changes with time. When the frequency of the electromagnetic wave changes linearly with time, the electromagnetic wave is referred to as a linear frequency modulated continuous wave.

The linear change herein is generally a linear change in one emission periodicity. For example, a waveform of the linear frequency modulated continuous wave is generally a sawtooth wave or a triangular wave. Certainly, there may alternatively be another possible waveform for the FMCW, for example, a linear frequency modulated step frequency waveform.

The following describes in detail the solutions in embodiments of this application.

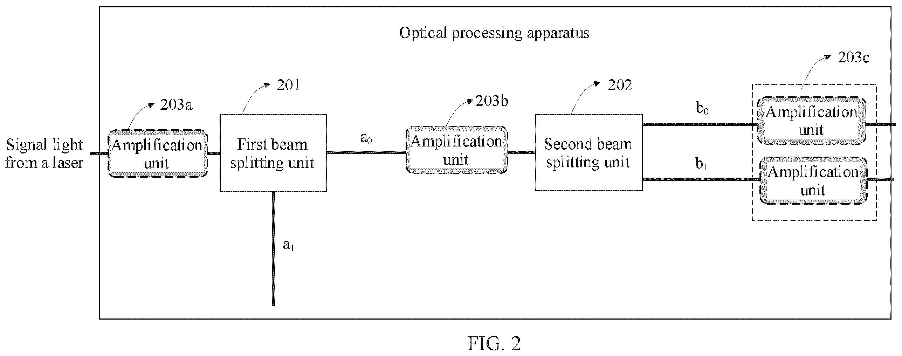

FIG. 2 is a diagram of a structure of an optical signal processing apparatus according to an embodiment of this application. In this example, the optical signal processing apparatus includes a first beam splitting unit 201, a second beam splitting unit 202, and a plurality of stages of amplification units, and a black bold line represents an optical transmission path. For ease of description, the following describes a quantity of stages of amplification units as M stages, where M is an integer and M≥2.

**The first beam splitting unit 201** is configured to perform beam splitting on signal light from a laser, to obtain a plurality of pieces of sub signal light. For example, the pieces of sub signal light may include sub signal light a₀ and sub signal light a₁.

In a possible implementation, a part of pieces of sub signal light (for example, the sub signal light a₀) in the plurality of pieces of sub signal light may be transmitted to the second beam splitting unit 202. Further, another part of pieces of sub signal light (for example, the sub signal light a₁) may be transmitted to another unit (not shown). For example, a part of pieces of sub signal light may be transmitted to a frequency mixing unit as local oscillation signal light, and/or a part of pieces of sub signal light may be input into a feedback unit as feedback signal light, or the like.

In a possible implementation, each path of sub signal of a plurality of sub signals is transmitted to the second beam splitting unit 202.

It should be understood that two paths of sub signal light shown in FIG. 2 are merely examples, and a quantity of pieces of sub signal light is not limited in this application. A quantity of lasers shown in FIG. 2 is merely an example. Optionally, the signal light from the laser may be signal light whose frequency linearly changes with time. For example, the signal light from the laser may be frequency modulated continuous wave (frequency modulated continuous waves, FMCW) laser light.

**The second beam splitting unit 202** is configured to split the input signal light into a plurality of pieces of second signal light. For example, the plurality of pieces of second signal light may include second signal light b₀ and second signal light b₁. Certainly, two paths of second signal light shown in FIG. 2 are merely examples, and a quantity of pieces of second signal light is not limited in this application.

In a possible implementation, a part of pieces of second signal light in the plurality of pieces of second signal light may be emitted from the optical signal processing apparatus, to form detection signal light. Further, another part of pieces of second signal light may be used as local oscillation signal light, feedback signal light, or the like.

**Each stage of amplification unit in the M stages of amplification units** is configured to amplify intensity of the signal light. A plurality of stages of amplification units are disposed, so that the signal light can be amplified in a hierarchical manner. It should be understood that the plurality of stages of amplification units do not mean a plurality of amplification units, but mean that a specific path of signal light is amplified at least twice.

Optionally, each stage of amplification unit may include one or more amplification units. For example, an amplification unit 203c is one stage of amplification unit, the stage of amplification unit may include a plurality of amplification units, and each amplification unit is configured to amplify one path of second signal light.

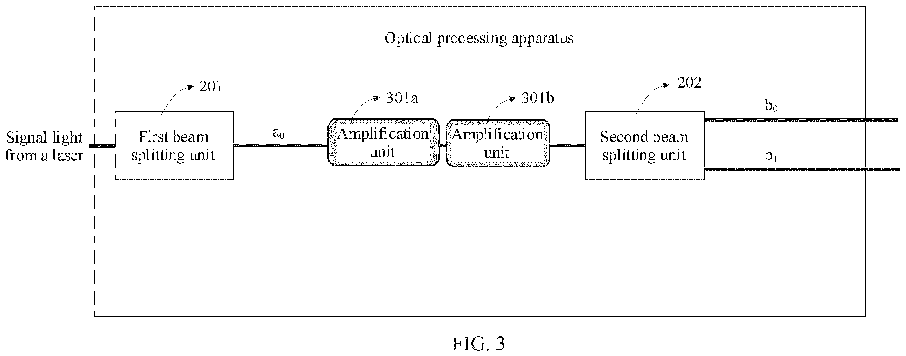

It should be understood that there may be a plurality of possible implementations for locations of the plurality of stages of amplification units. The following lists two possible cases by using examples:
**Case 1:** The plurality of stages of amplification units may be disposed between a plurality of other units in a distributed manner. For example, in the example shown in FIG. 2, an amplification unit 203a is one stage of amplification unit, an amplification unit 203b is one stage of amplification unit, and the amplification unit 203c is one stage of amplification unit. The M stages of amplification units may include at least two stages of the amplification unit 203a, the amplification unit 203b, and the amplification unit 203c.
**Case 2:** The plurality of stages of amplification units may be adjacently disposed. FIG. 3 is a diagram of a structure of another optical signal processing apparatus according to an embodiment of this application. An amplification unit 301a is one stage of amplification unit, and an amplification unit 301b is another stage of amplification unit.

Optionally, the optical signal processing apparatus may further include an input port, and the input port is configured to receive the signal light from the laser.

In this embodiment of this application, signal light on a plurality of channels may be obtained by performing optical splitting on the signal light from the laser through the optical splitting unit. These pieces of signal light may pass through the plurality of stages of amplification units, and the plurality of stages of amplification units may perform amplification in a plurality of stages on these pieces of signal light, so that power of the output signal light can be ensured. According to this embodiment of this application, optical splitting and amplification can be performed on the signal light from the laser, to increase a quantity of channels and ensure power of signal light on each channel. This can reduce costs and ensure detection performance, and a commercial value is large.

In addition, a working principle of the amplification unit is to generate signal light with higher power by using a drive current. The plurality of stages of amplification units are disposed, so that a location of the amplification unit and a current of each amplification unit can be flexibly designed, to avoid an excessively large current of a specific amplification unit. On one hand, this can reduce a risk of burning out electrical devices due to an excessively large current, and reduce a heat dissipation requirement. On the other hand, this can reduce crosstalk caused by a large current, reduce noise and interference, and improve signal light effectiveness. In conclusion, a service life of the optical signal processing apparatus can be prolonged through the plurality of stages of amplification units, and detection performance can be improved.

The foregoing describes a basic structure of the optical signal processing apparatus. The following describes some possible designs of embodiments of this application. It should be noted that the following plurality of designs may be separately implemented, or may be combined. For a combination case, the following also provides example descriptions. The following separately describes the plurality of possible designs first.

### [Design 1]

In a possible design, a part or all of modules in the optical signal processing apparatus may be chips, or may be implemented in a chip. The chip herein may be a silicon photonics chip, an integrated circuit (Integrated Circuit, IC) chip, or the like.

Alternatively, a part or all of modules in the optical signal processing apparatus may be implemented on a material platform. The material platform herein is also referred to as a substrate. A material of the material platform may be semiconductors, ceramics, glass, plastic, or the like.

For example, the material of the material platform includes but is not limited to a complementary metal-oxide-semiconductor (complementary metal-oxide-semiconductor, CMOS), silicon dioxide, silicon nitride, silicon oxynitride, indium phosphide, silicon-on-insulator (silicon-on-insulator, SOI), and the like.

In a possible solution, when the optical signal processing apparatus is implemented in a form of a chip or implemented on a material platform, signal light is transmitted in the chip (or on the material platform) by using a waveguide.

For example, the material platform further includes but is not limited to a silicon-on-insulator (silicon-on-insulator, SOI) waveguide platform, a silicon nitride waveguide platform, a silicon oxynitride waveguide platform, and a silicon dioxide planar lightwave circuit (planar light waveguide circuit, PLC) waveguide platform. Optionally, a material bottle body may also be a multi-layer waveguide platform including a plurality of types of waveguides that are stacked.

The chip or material platform integration manner improves integration of the optical signal processing apparatus, thereby reducing an overall volume of the apparatus; and can further reduce impact of vibration on an optical element and an optical path, and improve device stability and optical path stability, thereby improving detection performance of a detection apparatus.

### [Design 2]

An amplifier may be implemented in a chip manner. When the optical signal processing apparatus is implemented in a silicon photonics chip (or on a material platform), the amplifier may be coupled in the chip (or on the material platform), or coupled outside the chip (or the material platform), for example, an outer side of the chip.

In a possible implementation, the amplifier may be implemented through the chip, and has an incident end face and an emergent end face. The incident end face of the amplifier is coupled to a waveguide, so that signal light can enter the incident end face of the SOA from the waveguide in the chip.

In some scenarios, if amplified signal light further needs to be transmitted into the waveguide, the emergent end face may also be coupled to the waveguide, so that the amplified signal light enters the waveguide from the emergent end face for further transmission.

In an example in which the optical signal processing apparatus is implemented in the silicon photonics chip, the amplifier may be coupled to the silicon photonics chip in an integration manner.

For example, the amplifier chip is coupled to the silicon photonics chip in a flip-mounted manner. Flip means that the amplifier chip and the silicon photonics chip are separately processed. During integration, one chip (generally, an inverted amplifier chip) is inverted to attach the chip together with another chip.

For another example, the amplifier chip is coupled to the silicon photonics chip in a spatial light manner through a lens or the like. In the flip-mounted manner, two chips are usually closely attached to each other without passing through the lens. In the spatial light manner, there is space between two chips, and a lens is disposed in the space. After being emitted from one chip, the signal light is converged through the lens and then enters the other chip.

For another example, the amplifier chip is coupled to the silicon photonics chip in a chip-to-wafer attaching manner. Alternatively, the amplifier chip is coupled to the silicon photonics chip in a wafer-to-wafer attaching manner.

### [Design 3]

This is not limited to the foregoing design. In a possible design, the M stages of amplification units include at least a first-stage amplification unit and a second-stage amplification unit.

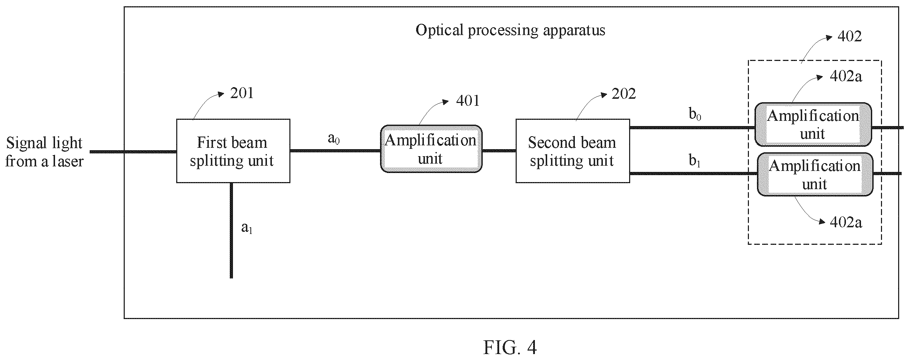

For example, FIG. 4 is a diagram of a structure of another possible optical signal processing apparatus according to an embodiment of this application. The signal light from the laser passes through the first beam splitting unit 201, and is split into the plurality of pieces of sub signal light, and a first-stage amplification unit 401 is configured to amplify at least one of the plurality of pieces of sub signal light to generate first signal light. The second beam splitting unit 202 is configured to split the first signal light into a plurality of pieces of second signal light, and a second-stage amplification unit 402 is configured to amplify at least one of the plurality of pieces of second signal light to generate third signal light.

Optionally, the second-stage amplification unit 402 includes a plurality of amplification units, for example, an amplification unit 402a and an amplification unit 402b shown in FIG. 4.

In this implementation, all stages of amplification units are disposed after an optical splitting unit in a distributed manner. On one hand, after optical splitting is performed, a part of or all pieces of signal light are amplified, so that a current range of the amplification unit can be further narrowed. On the other hand, a plurality of paths of signals after optical splitting usually have different functions or point to different regions in a field of view. One stage of amplification unit is disposed after the optical splitting unit, and a location of the amplification unit may be designed as required, thereby improving accuracy and effectiveness of implementing an amplification function, and improving flexibility of controlling power of the signal light.

In the foregoing implementation, a beam splitting unit may split the signal light into a plurality of paths, and each stage of amplification unit is disposed after the beam splitting unit.

In a possible solution, each stage of amplification unit may be configured to amplify a part of pieces of signal light on which beam splitting is performed. That is, the at least one piece of sub signal light is a part of pieces of sub signal light in the plurality of pieces of sub signal light, and/or the at least one piece of second signal light is a part of pieces of second signal light in the plurality of pieces of second signal light.

In a possible implementation, the plurality of pieces of sub signal light include local oscillation signal light and detection signal light, and one stage of amplification unit (for example, the first-stage amplification unit) in the plurality of stages of amplification units is configured to amplify the detection signal light to generate the first signal light. As shown in FIG. 4, the plurality of pieces of sub signal light obtained through beam splitting by the first beam splitting unit include sub signal light a₀ and sub signal light a₁. The sub signal light a₀ is used as the detection signal light, and the sub signal light a₁ is used as the local oscillation signal light. In this case, the first-stage amplification unit 401 is configured to amplify the detection signal light.

The local oscillation signal light is used for frequency mixing to obtain a beat frequency signal, a frequency multiplication signal, a frequency division signal, or the like. The detection signal light is emitted to the field of view for detection.

Because the local oscillation signal light is stable in a transmission process and an energy loss is small, and an energy loss in a process in which a signal is emitted to the field of view and then a return signal is received is large. Therefore, the first-stage amplification unit is mainly configured to amplify the detection signal light, so that power of the detection signal light can be accurately increased, and detection performance can be improved.

### [Design 4]

This is not limited to the foregoing design. In a possible design, in the plurality of pieces of second sub signal light, a part of second sub signals are used as local oscillation signal light, and a part of second sub signals are used as detection signal light. One stage of amplification unit (for example, the second-stage amplification unit) in the plurality of stages of amplification units is configured to amplify the detection signal light to generate first signal light.

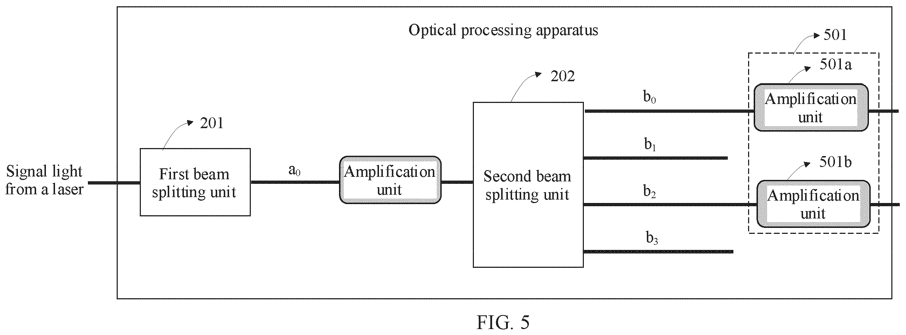

For example, FIG. 5 is a diagram of a structure of another possible optical signal processing apparatus according to an embodiment of this application. The plurality of pieces of second signal light obtained through beam splitting by the first beam splitting unit include second signal light b₀, second signal light b₁, second signal light b₂, and second signal light b₃. The second signal light b₀ and the second signal light b₂ are used as the detection signal light, and the second signal light b₁ and the second signal light b₃ are used as the local oscillation signal light. A second-stage amplification unit 501 is configured to amplify the detection signal light.

Specifically, the second-stage amplification unit 501 includes a plurality of amplification units, for example, an amplification unit 501a and an amplification unit 501b. The amplification unit 501a is configured to amplify the second signal light b₀, and an amplification unit 501c is configured to amplify the second signal light b₂.

In this implementation, the second-stage amplification unit is mainly configured to amplify the detection signal light, so that power of the detection signal light can be accurately increased, and detection performance can be improved.

Optionally, in a possible implementation, the local oscillation signal light and the detection signal light in the plurality of pieces of second signal light are interleaved each other. That is, signal light on both sides of the local oscillation signal light is the detection signal light, and signal light on both sides of the detection signal light is the local oscillation signal light. As shown in FIG. 5, the second signal light b₀ (detection signal light) is adjacent to the second signal light b₁ (local oscillation signal light), and the second signal light b₁ (local oscillation signal light) is adjacent to the second signal light b₀ (detection signal light) and the second signal light b₂ (detection signal light).

The local oscillation signal light may need to be transmitted to a frequency mixing unit to be frequency-mixed with return signal light, and the return signal light also has a plurality of channels. Consequently, a plurality of pieces of return signal light may cross optical paths of the plurality of pieces of detection signal light, and crosstalk occurs. However, in this implementation, the local oscillation signal light and the detection signal light are separated in the beam splitting unit at the back, so that the local oscillation signal and the detection signal light are interleaved, the return signal light does not need to pass through the detection signal light for frequency mixing, transmission crosstalk between the signal light can be reduced, and signal effectiveness can be improved.

### [Design 5]

This is not limited to the foregoing design. In a possible design, signal light input into the first beam splitting unit is from a plurality of lasers. The following uses an example in which there are two lasers (which are referred to as a first laser and a second laser for ease of distinguishing) for description. This application is also applicable to another quantity of lasers.

Signal light from the first laser and signal light from the second laser pass through the first beam splitting unit to obtain a plurality of pieces of sub signal light. One stage of amplification unit in the plurality of stages of amplification units is configured to amplify at least one piece of sub signal light to generate first signal light, and the at least one piece of sub signal light includes a part of pieces of signal light from the first laser and a part of pieces of signal light from the second laser. For a subsequent processing process, refer to the foregoing embodiments and other designs.

In a possible implementation, the optical signal processing apparatus may include a beam combining unit, and the beam combining unit is configured to perform beam combining on the part of pieces of signal light from the first laser and the part of pieces of signal light from the second laser, to obtain at least one piece of signal light. Optionally, the beam combining unit may be implemented by using a multi-wavelength beam combining structure such as wavelength division multiplexing (wavelength division multiplexing, WDM) or an arrayed waveguide grating (arrayed waveguide grating, AWG), or may be implemented by using an optical energy beam combining structure such as a multi-mode interferometer (multi-mode interferometer, MMI) or a directional coupler (directional coupler, DC). It may be understood that, because an optical path is reversible, the WDM, the AWG, the MMI, the DC, and the like may also be used for beam splitting and/or demultiplexing.

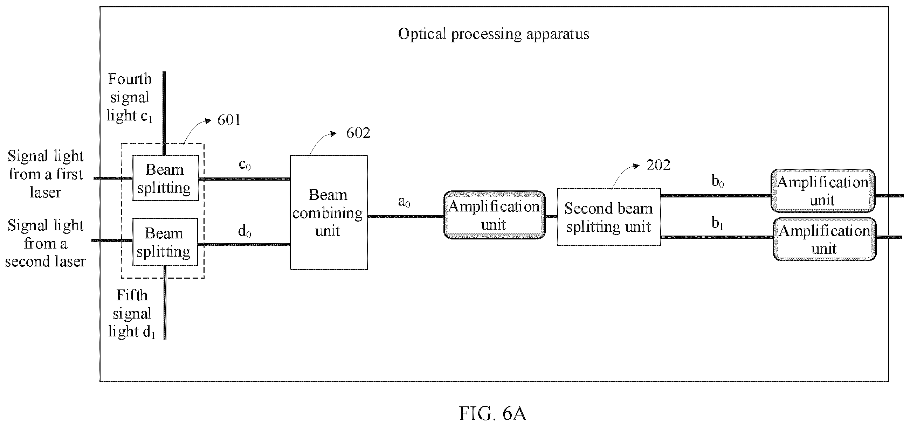

For example, FIG. 6A is a diagram of a structure of another possible optical signal processing apparatus according to an embodiment of this application. A first beam splitting unit 601 is configured to split the signal light from the first laser into a plurality of pieces of fourth signal light, and split the signal light from the second laser into a plurality of pieces of fifth signal light. The fourth signal light and the fifth signal light herein may be considered as the foregoing sub signal light.

A quantity of pieces of fourth signal light and a quantity of pieces of fifth signal light are not limited in this application. For example, the plurality of pieces of fourth signal light may include fourth signal light c₀ and fourth signal light c₁, and the plurality of pieces of fifth signal light may include fifth signal light d₀ and fifth signal light d₁.

The optical signal processing apparatus further includes a beam combining unit 602. The beam combining unit 602 is configured to perform beam combining on at least one piece of fourth signal light and at least one piece of fifth signal light, to obtain sub signal light a₁. For ease of distinguishing, signal light obtained through beam combining is referred to as sixth signal light below.

One stage of amplification unit in the M stages of amplification units is configured to amplify the sixth signal light (namely, the sub signal light a₁ shown in FIG. 6A) to generate the first signal light. For a subsequent processing process, refer to the foregoing descriptions.

In this implementation, the optical signal processing apparatus is also applicable to processing the signal light from the plurality of lasers. The foregoing uses only the first laser and the second laser as an example. Beam combining may be performed on a part of pieces of signal light in the signal light from the plurality of lasers. In a process of emitting signal light on which beam combining is performed, as emitting signal light of a single light source, cross can be avoided, and crosstalk can be reduced.

Optionally, the signal light emitted by the plurality of lasers usually has different properties. For example, the signal light from the first laser and the signal light from the second laser have different frequency sweep slopes. For example, the signal light from the first laser and the signal light from the second laser have different center wavelengths.

In a return processing process, a return signal is demultiplexed, so that return signals of different detection signal light can be distinguished, and a plurality of sampling points can be obtained by using a return signal of one channel. For example, the first laser and the second laser may respectively emit linear frequency modulated laser light with a positive slope and linear frequency modulated laser light with a negative slope. After beam combining is performed, detection signal light on one channel includes the linear frequency modulated laser light with a positive slope and the linear frequency modulated laser light with a negative slope. The detection signal light on the channel is irradiated to a same point of a target. After beam splitting is performed on the return signal, the return signal is separately frequency-mixed with, to obtain two sampling points, so that a point rate can be improved, and a higher point cloud resolution can be obtained.

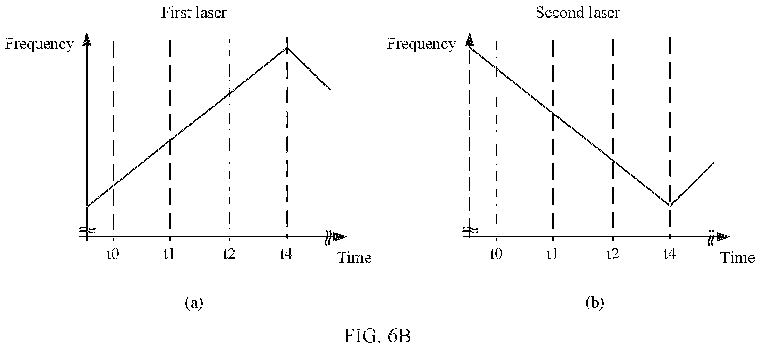

For example, FIG. 6B is a diagram of a slope of signal light from a plurality of lasers according to an embodiment of this application. It may be learned that in a time period from t0 to t1, a laser 1 emits frequency sweep laser light with a positive slope, and a laser 2 emits frequency sweep laser light with a negative slope. Therefore, during beat frequency, after being emitted, return signals obtained after reflection by the target may be separated and frequency-mixed with respective local oscillators to form beat frequency signals of different frequencies. The beat signal may be sequentially intercepted based on time to obtain a plurality of signal segments. The plurality of signal segments are respectively used to obtain information about a plurality of measurement points. For example, during the first time of beat frequency, a signal whose first coherence duration is N1 is processed after flight time, to obtain distance and speed information of the first measurement point; and during the second time of beat frequency, a signal whose second coherence duration is N2 is processed, to obtain information of the second measurement point, where lengths of the two signal segments may be equal or different.

Optionally, FIG. 6B is described by using different directions of frequency sweep slopes. In a specific implementation process, signal light from different lasers may be distinguished in another manner.

For example, both the laser 1 and the laser 2 emit frequency sweep laser light with a positive slope or frequency sweep laser light with a negative slope, but the frequency sweep slopes (namely, frequency sweep speeds) are different.

For another example, the laser 1 and the laser 2 emit laser light with different wavelength ranges. It should be understood that different wavelength ranges herein mean different center wavelengths, or may be understood as different upper limits and lower limits of the wavelength ranges of the laser light. That is, the wavelength ranges of the two types of laser light may overlap to some extent, but do not completely overlap. For example, the laser 1 emits an infrared ray, and the laser 2 emits visible light.

### [Design 6]

The beam splitting unit may include one or more beam splitters. A quantity of branches of the beam splitter is not limited in this application. For example, the beam splitter may be a one-to-two beam splitter, a one-to-three beam splitter, or the like.

In a possible design, the beam splitting unit may include a plurality of beam splitters, the plurality of beam splitters may be arranged in a tree structure, and signals of a plurality of channels are output through optical splitting for a plurality of times.

The second beam splitting unit is used as an example. The second beam splitting unit includes, for example, N beam splitters, where N is an integer and N>0. The N beam splitters are arranged in a tree topology, each beam splitter is used as a node of the tree topology, and signal light obtained through beam splitting by a beam splitter at each parent node location is provided for a beam splitter at a child node location; and first signal light is input into a beam splitter at a root node location, and the plurality of pieces of second signal light are output from a beam splitter at a leaf node location.

The following provides several implementation diagrams of the beam splitting unit by using examples. It should be noted that in some embodiments below, an SOA is used as an example of the amplification unit for description, and this application is also applicable to a case in which another amplifier is used.

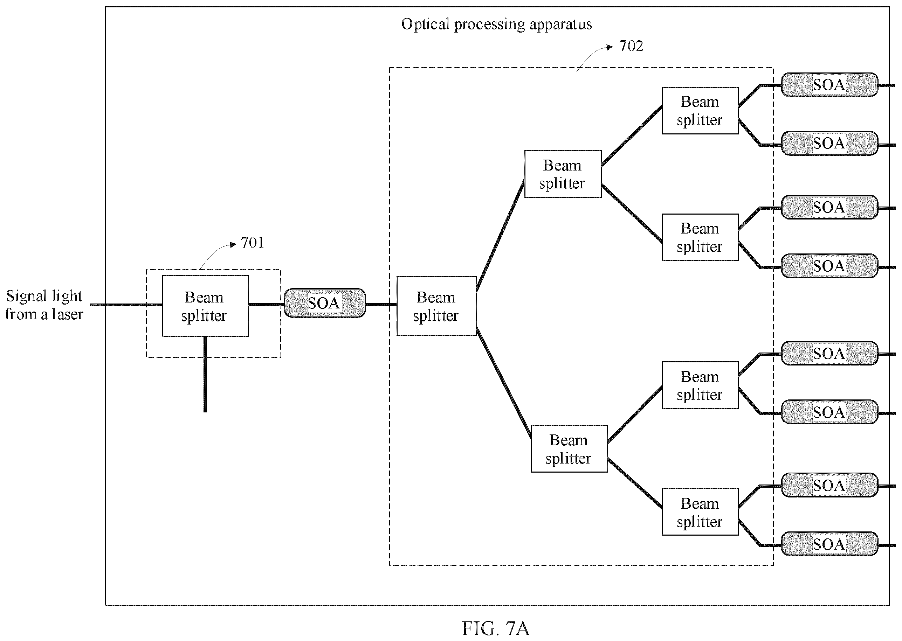

For example, FIG. 7A is a diagram of a structure of another signal processing apparatus according to an embodiment of this application. As shown in FIG. 7A, a first beam splitting unit 701 includes a one-to-two beam splitter. The one-to-two beam splitter splits the signal light from the laser into two pieces of sub signal light. A second beam splitting unit 702 includes a plurality of one-to-two beam splitters. Each one-to-two beam splitter splits input the signal light into two pieces, and finally outputs a plurality of pieces of second signal light from a beam splitter at a leaf node location.

In some scenarios, a plurality of paths of signal light may be split by using a waveguide, that is, a beam splitter may be implemented by using a waveguide. The optical waveguide is used as a beam splitting unit, and is easier to be integrated, so that a volume can be further reduced, and stability can be improved. In addition, waveguide optical splitting can reduce an energy loss caused by optical splitting, increase an effective signal ratio, and avoid stray light.

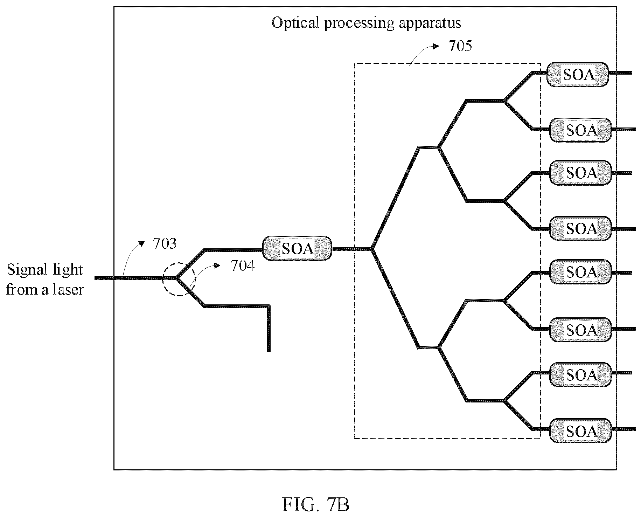

For example, FIG. 7B is a diagram of a structure of another signal processing apparatus according to an embodiment of this application. The second beam splitting unit includes a plurality of waveguides, and each waveguide is configured to split input signal light into a plurality of pieces, and finally output a plurality of pieces of second signal light.

As shown in FIG. 7B, a waveguide 703 may be used as the first beam splitting unit, and split the input signal light into a plurality of pieces of sub signal light in a region 704. For another example, the second beam splitting unit 705 includes a plurality of waveguides, and the plurality of waveguides include a plurality of bifurcation ports, and the input signal light is split into the plurality of pieces of second signal light through the bifurcation ports of the plurality of waveguides.

In a possible implementation, one stage of amplification unit in the M stages of amplification units includes a plurality of amplifiers, and the plurality of amplifiers are located after a beam splitter at a leaf node location.

As shown in FIG. 7A and/or FIG. 7B, the SOA is located after an end-layer beam splitter.

It should be noted that, in the embodiment shown in FIG. 7A and FIG. 7B, each piece of second signal light passes through a same optical splitting level, but it is not limited to a case that each piece of second signal light has same power. The following lists two manners of implementing a design of a difference between power of the plurality of pieces of second signal light.

Implementation 1: The beam splitter may set an optical splitting ratio during optical splitting. For example, in two paths of signal light obtained by the one-to-two beam splitter through splitting, energy of one path of signal light may be higher than that of the other path.

The optical splitting ratio is controlled, so that a part of pieces of second signal light can have higher power, and the power of the signal light may be designed as required for a detection result (for example, a requirement for a resolution, detection accuracy, a detection distance, or the like). For example, the second signal light emitted to a region of interest in a field of view has higher power, to improve a resolution, detection accuracy, and the like of a detection result of the region of interest.

Optionally, the region of interest may be a middle part of the field of view, a predefined field of view region, or the like.

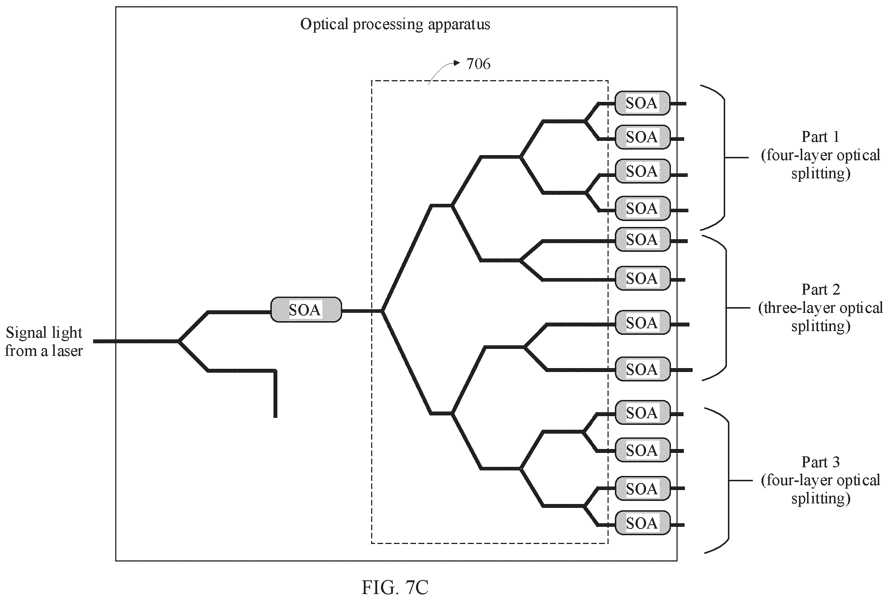

Implementation 2: A quantity of layers of optical splitters that a part of pieces of second signal light pass through is different from a quantity of layers of optical splitters that another part of pieces of second signal light pass through. For example, FIG. 7C is a diagram of a structure of another optical signal processing apparatus according to an embodiment of this application. A second beam splitting unit 706 splits output signal light into a plurality of pieces of second signal light. Four-layer optical splitting is performed on second signal light corresponding to a part 1 and second signal light corresponding to a part 3, and three-layer optical splitting is performed on second signal light corresponding to a part 2.

The optical splitting level is controlled, so that a part of pieces of second signal light can have higher power, and the power of the signal light may be designed as required for a detection result (for example, a requirement for a resolution, detection accuracy, a detection distance, or the like). For example, the second signal light emitted to a region of interest in a field of view undergoes fewer optical splitting levels, and therefore the second signal light has higher power, to improve a resolution, detection accuracy, and the like of a detection result of the region of interest.

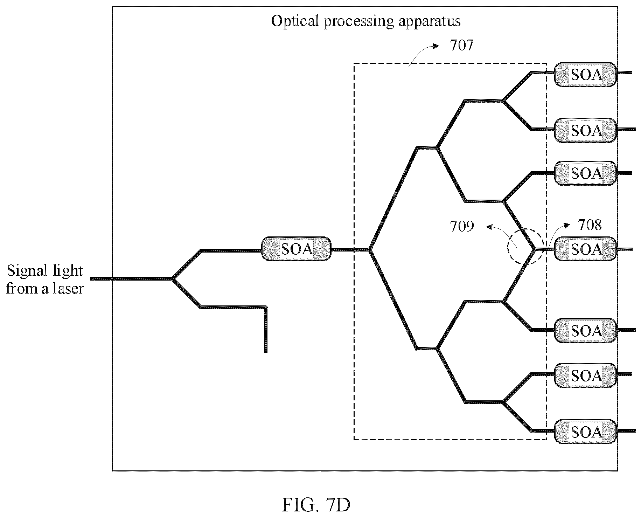

Implementation 3: A part of pieces of second signal light may be obtained through combining. For example, FIG. 7D is a diagram of a structure of another possible optical signal processing apparatus according to an embodiment of this application. A second beam splitting unit 707 splits output signal light into a plurality of pieces of second signal light. Second signal light 708 is obtained by combining two paths of signal light in a region 709. The second signal light 708 may have higher power.

The foregoing implementations of implementing the difference between the power of the pieces of second signal light through the optical splitting unit are merely examples. In a specific implementation process, the difference between the pieces of second signal light may also be implemented in another manner.

In conclusion, a tree-shaped beam splitter structure is used, so that energy distribution of a signal on which optical splitting is performed can be controlled, to flexibly design resolution distribution of a detection apparatus.

### [Design 7]

It may be learned from the design 6 that the second beam splitting unit includes a plurality of beam splitters of a tree structure, and each beam splitter is used as a node of a tree topology. The tree structure includes a plurality of branches, which also makes a design of a location of the amplification unit more flexible. The following lists several possible cases of the amplification unit:
Case 1: A part of stages of amplification units in the M stages of amplification units include a plurality of amplifiers, **and the plurality of amplifiers are located after a beam splitter at a leaf node location.**

As shown in FIG. 7A, FIG. 7B, FIG. 7C, and FIG. 7D, a plurality of SOAs are disposed after the beam splitter at the leaf node location. In this implementation, the amplifier is disposed after the second beam splitting unit, and the signal light is input into the amplifier after optical splitting is performed on the signal light, so that power of the third signal light can be more accurately controlled, and stability of the detection signal light can be improved.

**Case 2:** A part of stages of amplification units in the M stages of amplification units include a plurality of amplifiers, **and the plurality of amplifiers are located between beam splitters in a plurality of tree topologies.**

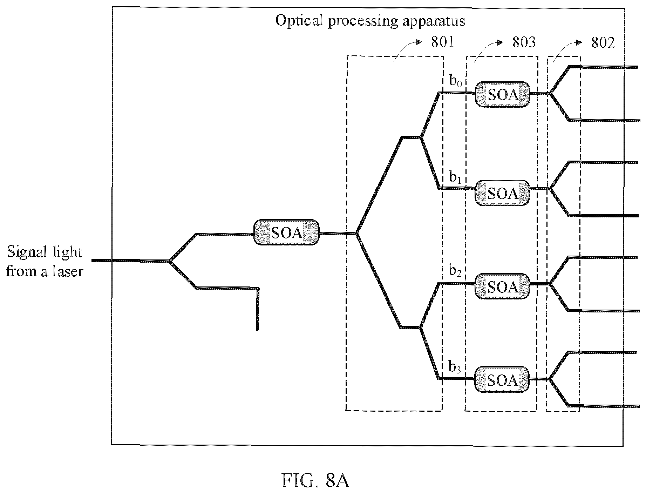

For example, FIG. 8A is a diagram of a structure of another optical signal processing apparatus according to an embodiment of this application. The second beam splitting unit includes two beam splitting units: a beam splitting unit 801 and a beam splitting unit 802. The beam splitting unit 801 includes a plurality of beam splitters, the beam splitting unit also includes a plurality of beam splitters, and signal light input by the beam splitting unit 802 is obtained through beam splitting by the beam splitting unit 801. One stage of amplification unit, namely, an amplification unit 803, is disposed between the beam splitting unit 801 and the beam splitting unit 802, and the amplification unit 803 includes a plurality of SOAs.

As shown in FIG. 8A, the beam splitting unit 801 is configured to split the input signal light into a plurality of pieces of second signal light, for example, second signal light b₀, second signal light b₁, second signal light b₃, and second signal light b₁ shown in FIG. 8A. The amplification unit 803 is configured to amplify at least one of the plurality of pieces of second signal light, to obtain several pieces of third signal light. The several pieces of third signal light may be further input into the beam splitting unit 802 for beam splitting again.

It should be understood that a design of the SOA shown in FIG. 8A is merely an example, and there may be another design in a specific implementation process. For example, the SOA may be disposed on a transmission path of a part of pieces of second signal light. In this case, the amplification unit 803 is configured to amplify the part of pieces of second signal light. For another example, beam splitting may not be performed on the part of pieces of second signal light (or the third signal light).

In this implementation, after passing through the second-stage amplification unit, the signal light is further optically split again, which is equivalent to that several pieces of signal light may share one amplifier, so that a quantity of amplifiers can be reduced, and costs can be saved. In addition, a beam splitter is added after a last-stage amplifier, so that a quantity of emitting channels can be increased, and a point rate can be improved.

**Case 3:** A part of stages of amplification units in the M stages of amplification units include a plurality of amplifiers. **In the plurality of amplifiers, a part of amplifiers are located after a beam splitter at a leaf node location, and another part of amplifiers are located between beam splitters in a plurality of tree topologies.**

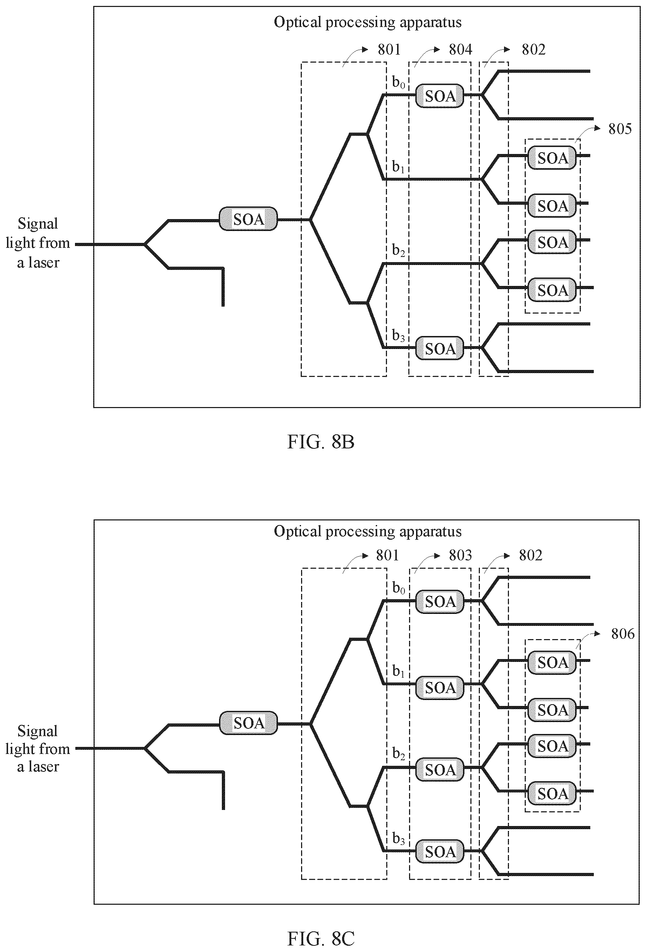

For example, FIG. 8B is a diagram of a structure of another optical signal processing apparatus according to an embodiment of this application. One stage of amplification unit, namely, an amplification unit 804, is disposed between the beam splitting unit 801 and the beam splitting unit 802. One stage of amplification unit, namely, an amplification unit 805, is disposed after the beam splitting unit 802.

Specifically, the amplification unit 804 includes a plurality of SOAs, configured to amplify a part of pieces of second signal light to obtain third signal light. The part of pieces of third signal light may be input into the beam splitting unit 802 for further optical splitting. Another part of pieces of unamplified second signal light are also input into the beam splitting unit 802, and signal light obtained through beam splitting is input into the amplification unit 805 for amplification.

In this implementation, a part of pieces of third signal light are amplified by the amplifier and then optically split, which is equivalent to that a final part of pieces of signal light share one amplifier; and a part of pieces of signal light are amplified after multi-layer optical splitting is performed, that is, each path of signal light is amplified through one amplifier independently. In this way, power of the detection signal light may be set as required. This not only saves costs, but also preferentially ensures power of the part of pieces of detection signal light.

**In some scenarios, a part of pieces of signal light may further pass through an amplifier for a plurality of times.** For example, FIG. 8C is a diagram of a structure of another optical signal processing apparatus according to an embodiment of this application. One stage of amplification unit, namely, an amplification unit 803, is disposed between the beam splitting unit 801 and the beam splitting unit 802. One stage of amplification unit, namely, an amplification unit 806, is disposed after the beam splitting unit 802.

The amplification unit 803 is configured to amplify the plurality of pieces of second signal light to obtain third signal light. The part of pieces of third signal light may be input into the beam splitting unit 802 for further optical splitting. The part of pieces of signal light in the signal light obtained through optical splitting by the beam splitting unit 802 is amplified by the amplification unit 806. In conclusion, the beam splitter of a tree structure and the plurality of amplification units are used, so that a manufacturer can set a location of the amplifier as required, and control power of the detection signal light, to improve flexibility of an optical path design and a power design.

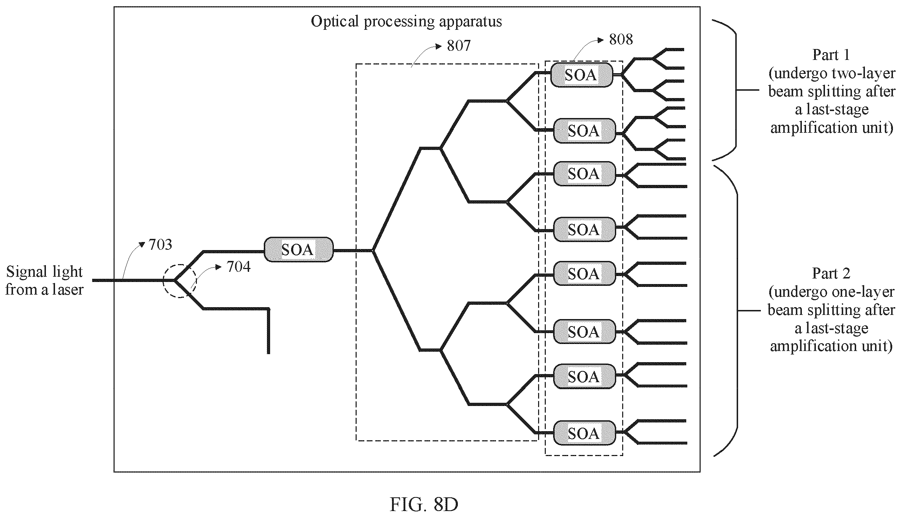

**Case 4:** A last-stage amplification unit in the M stages of amplification units includes a plurality of amplifiers, **the plurality of amplifiers are located after the second beam splitting unit, and the signal light may be optically split again after passing through the last-stage amplification unit.** For example, FIG. 8D is a diagram of a structure of another optical signal processing apparatus according to an embodiment of this application. As shown in FIG. 8D, an amplification unit 808 (namely, the last-stage amplification unit) is disposed after a second beam splitting unit 807, the second beam splitting unit 807 is configured to output second signal light, and the second signal light is beam-split again after passing through the amplification unit 808.

Optionally, a beam splitting level and a quantity of pieces of signal light obtained through splitting are not strictly limited in this application. For example, signal light included in a part 1 shown in FIG. 8D undergoes two-layer beam splitting after the last-stage amplification unit 808, and signal light included in a part 2 undergoes one-layer beam splitting after the last-stage amplification unit 808.

### [Design 8]

In a possible design, an amplification function of the amplification unit is controllable. An SOA is used as an example. A feature that power of signal light output by the SOA is related to a drive current is used, and the optical signal processing apparatus may change the drive current of the amplification unit, so that the power of the signal light passing through the amplification unit is controlled, thereby improving flexibility and reducing energy consumption. The following uses an example in which the amplification unit is an SOA for description, and this is also applicable to another amplifier.

In some possible scenarios, the optical signal processing apparatus further includes a power controller, and the power controller is configured to adjust drive currents of a part of or all stages of amplification units in the M stages of amplification units, to control power of output signal light.

For example, the power controller may increase drive currents of a part of or all SOAs when signal light indicates a region of interest in a field of view, and decrease drive currents of a part of or all SOAs in another region of the field of view.

For example, the signal light scans the field of view in a row scanning manner, and time required for completing one time of scanning on a region of the field of view is 20 milliseconds (ms). The power controller may increase drive currents of a part of or all SOAs in the 5^{th} ms to the 10^{th} ms of each scanning periodicity, so that when a middle part of the field of view is scanned, the detection signal light has higher power, to improve a point rate of the middle part of the field of view. However, low power scanning in an edge region is used, so that power consumption can be reduced, heat dissipation can be controlled, and a service life can be prolonged.

For another example, the region of interest is defined in the field of view. When the signal light is scanned to the region of interest, a drive current of a corresponding SOAis increased, so that a point rate is increased for the region of interest, and a resolution of the region of interest in the detection result is improved. This helps perform recognition and decision-making by using a perception result, and improves intelligence.

In some possible scenarios, emitting power of a signal is related to a current pointing angle of the signal.

For example, emitting power is increased in a center field of view, and emitting power is decreased in an edge field of view.

For another example, in a scanning invalid region in which an emitting light beam cannot be emitted by a scanner, an optical power amplification function of the amplification unit is implemented. The scanning invalid region is a scanning angle at which the detection signal light cannot be completely projected into the field of view. In this case, the detection signal light may be projected into the apparatus.

The pointing angle of the signal can be changed by the scanner. In a possible solution, the power controller may adjust a drive current of the second-stage amplification unit based on a control signal from a processor and/or a controller, where the control signal is related to a pointing angle of the scanner.

### [Design 9]

This is not limited to the foregoing design. In a possible design, the optical signal processing apparatus further includes an optical input/output unit, the optical input/output unit includes a plurality of output ports, and the plurality of output ports are configured to emit detection signal light to space for detection.

Optionally, the output port may be provided by a final-stage amplifier, and/or provided by a coupler (which is referred to as an emitting coupler below for ease of distinguishing). Optionally, the emitting coupler may be an edge coupler or a grating coupler.

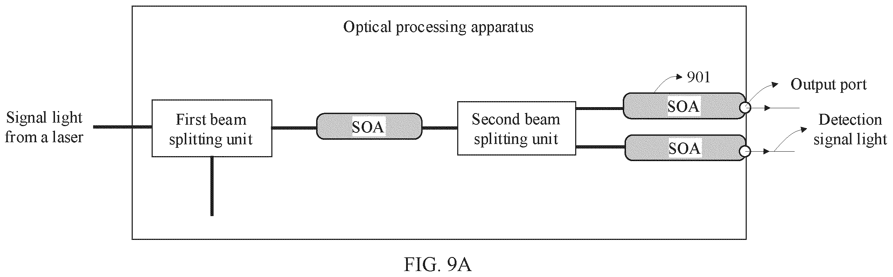

In a possible implementation, the amplifier includes an incident end face and an emergent end face, and the emergent end face may be used as the output port to output the signal light to the space. For example, FIG. 9A is a diagram of another optical signal processing apparatus according to an embodiment of this application. After entering an SOA 901, signal light is emitted from an emergent end face of the SOA 901 to the outside, to form detection signal light.

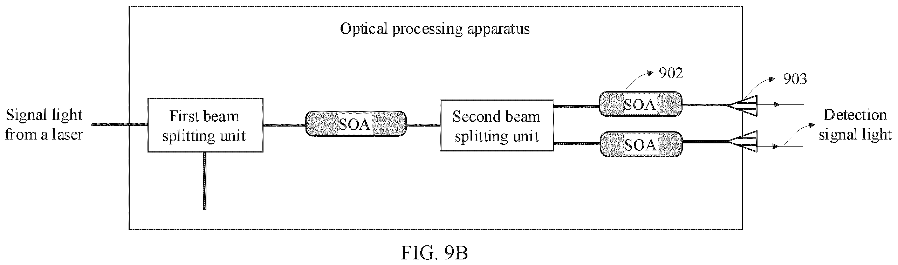

In another possible implementation, an output port of the signal light is provided by a coupler. For example, FIG. 9B is a diagram of another optical signal processing apparatus according to an embodiment of this application. After entering an SOA 902, signal light is transmitted from an emergent end face of the SOA 902 to an emitting coupler 903 (namely, a triangular component), and is emitted from an end face of the emitting coupler 903, to form detection signal light.

It should be understood that FIG. 9A and FIG. 9B are two possible implementations listed for describing a design of the output port, and do not limit a transmission path and a case of optical splitting. For example, the signal light from the SOA 902 to the emitting coupler 903 may further pass through an optical splitter and/or an optical switch. For related descriptions, refer to another design. Details are not enumerated herein again.

### [Design 10]

This is not limited to the foregoing design. In another possible design, the optical signal processing apparatus may further include a plurality of receiving ports, the plurality of receiving ports are configured to receive return signal light, and the return signal light includes reflection of the detection signal light.

It should be noted that, although the signal light is referred to as the return signal light herein, it is not limited to a case that the return signal light includes only the reflection of the detection signal light. For example, the return signal light may further include signal light from another light source in a field of view, for example, the sun, a street lamp, a vehicle lamp, or laser light.

Optionally, the receiving port may be implemented through a coupler (which is referred to as a receiving coupler below for ease of distinguishing), for example, an edge coupler or a grating coupler.

In a possible design, the receiving port may be coupled to the output port. That is, the output port may also be used as the receiving port. For example, a polarization beam splitter (polarizing beam splitter, PBS) may provide three ports (which are referred to as a port 1, a port 2, and a port 2 for ease of distinguishing). The port 1 receives the detection signal light and outputs the detection signal light to space through the port 3, and the port 3 further receives signal light from the field of view and outputs the signal light from the field of view through the port 2 as the return signal light. That is, the PBS may provide both the output port and the receiving port. For another example, a polarization beam splitting grating (polarization beam splitting grating, PSGC) coupler also includes a port 1 and a port 2. The port 1 is configured to receive detection signal light and output the detection signal light to space, and the port 2 is configured to obtain the return signal light.

In the foregoing design, it is known that power of the signal light is controllable. In a possible design, power of the detection signal light may be adjusted by monitoring energy intensity of the return signal light.

For example, when the capability intensity of the return signal light is quite low, the power of the detection signal light can be increased to improve detection accuracy.

For another example, when the capability intensity of the return signal light is quite high, the power of the detection signal light can be reduced. In this way, energy consumption can be reduced, and a possibility of burning out a detection element due to strong reflection of a high-reflection target or corner reflector target can be reduced.

In some possible scenarios, there is a correspondence between the receiving port and the output port. For example, a first output port and a first receiving port are used as an example. Signal light received by the first receiving port includes reflection of detection signal light output by the first output port. In this case, when power of the signal light received by the first receiving port is greater than a first threshold, the optical signal processing apparatus may reduce a drive current of the second-stage amplification unit to reduce power of the detection signal light output by the first output port. Similarly, when power of the signal light received by the first receiving port is less than a second threshold, the optical signal processing apparatus increases a drive current of the second-stage amplification unit to increase power of the detection signal light output by a first emitting subport.

Optionally, the operation of adjusting the drive current may be implemented by the power controller.

In a possible solution, the optical signal processing apparatus further includes a frequency mixing unit, and the frequency mixing unit is configured to obtain one or more frequency mixing results based on the return signal light and local oscillation signal light. The frequency mixing result herein may be signal light obtained through frequency mixing processing, beat frequency processing, or the like.

Optionally, the local oscillation signal light is signal light having a same property as the signal light from the laser. For example, as mentioned above, the local oscillation signal light may belong to the foregoing sub signal light, or belong to the foregoing second signal light.

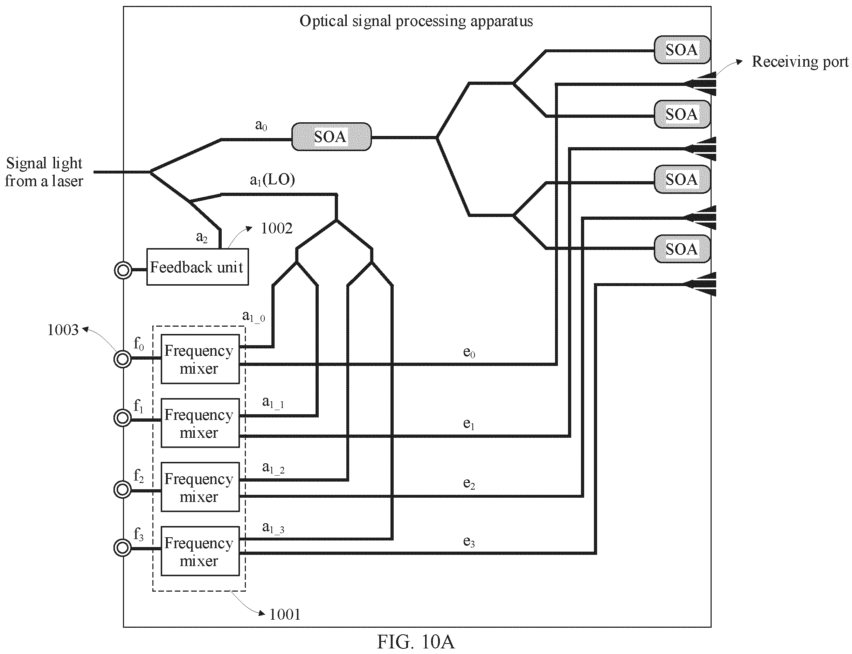

For example, FIG. 10A is a diagram of a structure of another possible optical signal processing apparatus according to an embodiment of this application. The optical signal processing apparatus may include a plurality of receiving ports and a frequency mixing unit 1001. For example, the frequency mixing unit may include a plurality of frequency mixers.

An input of the frequency mixing unit 1001 is local oscillation signal light and return signal light received by the receiving port. For ease of understanding, pieces of return signal light are respectively represented as e₀, e₁, e₂, and e₃. The local oscillation signal light also includes signal light on a plurality of channels, and the pieces of signal light are respectively represented as a_{1_0}, a_{1_1}, a_{1_2}, and a_{1_3}. The frequency mixing unit is configured to perform frequency mixing on the local oscillation signal light and the return signal light to obtain a plurality of frequency mixing results. As shown in FIG. 10A, the local oscillation signal light a_{1_0} and the return signal light e₀ are frequency-mixed in the frequency mixer to obtain a frequency mixing result f₀. Similarly, the local oscillation signal light e₁ and the return signal light a_{1_1} are frequency-mixed in the frequency mixer to obtain a frequency mixing result f₁. Frequency mixing performed on remaining signal light is deduced by analogy, and frequency mixing results f₀, f₁, f₂, and f₃ are obtained.

Further, the frequency mixing result may be input into a detection unit for further processing. As shown in FIG. 10A, the frequency mixing result f₁ may be input into an input port 1003 of the detection unit (where the input port of the detection unit is shown by using a circle).

Optionally, a part of detection units may further receive an output from a feedback unit 1002 (described below).

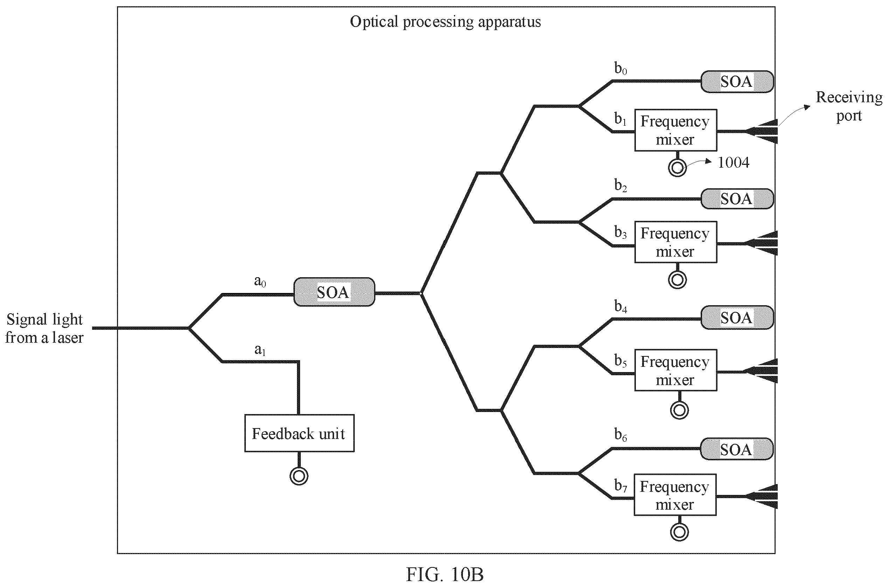

For example, FIG. 10B is a diagram of a structure of another possible optical signal processing apparatus according to an embodiment of this application. The optical signal processing apparatus may include a plurality of receiving ports and mixing units (a plurality of frequency mixers shown in FIG. 10B).

Inputs of the mixing units are local oscillation signal light and return signal light received by the receiving port, where the local oscillation signal light (for example, b1, b3, b5, and b7 shown in FIG. 10B) is output from the second beam splitting unit, and optionally before or after a last-stage SOA. The frequency mixing unit is configured to perform frequency mixing on the local oscillation signal light and the return signal light to obtain a plurality of frequency mixing results. As shown in FIG. 10B, the local oscillation signal light and the return signal light are frequency-mixed in the frequency mixer to obtain a frequency mixing result, and the frequency mixing result is input into an input port 1004 of a detection unit for further processing.

In a possible implementation, the local oscillation signal light may be obtained by partially reflecting emergent signal light, or the signal light received by the receiving port includes the local oscillation signal light and the return signal light.

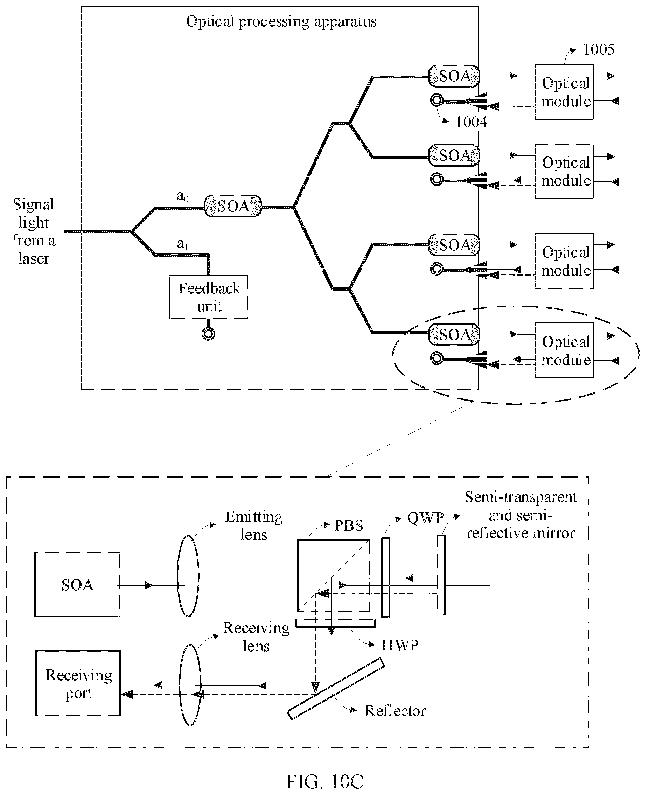

FIG. 10C is a diagram of a structure of another optical signal processing apparatus according to an embodiment of this application. Signal light output by an output port (for example, an SOA) passes through an optical module 1005. The optical module 1005 includes an optical element that performs partial reflection and partial transmission, and may partially reflect the output signal light. In this embodiment of this application, a reflection ratio of the optical element that performs partial reflection and partial transmission is not limited. For example, this solution is applicable to a ratio of semi-transmission and semi-reflection, a ratio of 70% transmission and 30% reflection, or the like.

As shown in FIG. 10C, the optical module 1005 includes a PBS, a QWP, a semi-transparent and semi-reflective mirror, an HWP (optional), a reflector (optional), and the like. The signal light output by the output port passes through the PBS, the QWP, and the semi-transparent and semi-reflective mirror. About half of the signal light passes through the semi-transparent and semi-reflective mirror, and half of the signal light is reflected. The reflected signal light passes through the QWP again. Because a polarization direction changes after passing through the QWP twice, the signal light reflected by the semi-transparent and semi-reflective mirror is reflected when passing through the PBS again, and reaches the receiving port through the HWP (optional) and the reflector (optional). The signal light reflected by the semi-transparent and semi-reflective mirror may be used as the local oscillation signal light.

Further, the return signal light from the field of view passes through the QWP and the PBS, is reflected when passing through the PBS, and reaches the receiving port through the HWP (optional) and the reflector (optional).

Optionally, the QWP may alternatively be replaced with one or more of two eighth wave plates, a Faraday rotator mirror, a combination of a Faraday rotator mirror and a wave plate, a combination of a quarter wave plate and a half wave plate, or the like.

In a possible implementation, the signal light received by the receiving port includes the local oscillation signal light and the return signal light. Therefore, the signal light received by the receiving port may be considered as signal light on which frequency mixing is performed. Further, the signal light received by the receiving port may be input into the input port 1004 of the detector for further processing.

It should be noted that FIG. 10C is illustrated by using an example in which a plurality of optical modules are respectively disposed before a plurality of receiving ports. In a specific implementation process, the plurality of optical modules may be replaced with optical modules that cover a plurality of emitting ports and a plurality of receiving ports.

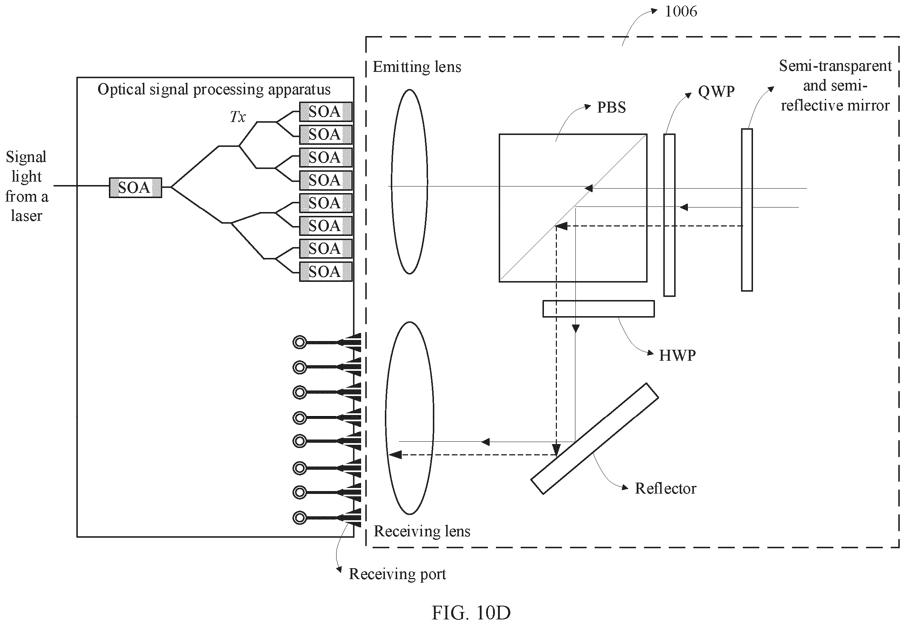

FIG. 10D is a diagram of a structure of another optical signal processing apparatus according to an embodiment of this application. Functions implemented by a plurality of optical modules 1005 in FIG. 10C may be implemented by an optical module 1006, and the optical module 1006 covers a plurality of emitting ports and a plurality of receiving ports.

A frequency mixing result obtained by the optical signal processing apparatus is used to determine related information of a target in the field of view. The related information of the target is, for example, a distance, a location, a speed, a reflectivity, or a color of the target.

In a possible implementation, the frequency mixing result may be transmitted to the detection unit, and the detection unit may obtain an electrical signal based on the frequency mixing result. The electrical signal may be used for processing to obtain the related information of the target.

The detection unit may include one or more detection elements (or referred to as detectors), and the detection element may be configured to receive signal light and obtain an electrical signal. For example, the detection element may be a photo diode (Photo Diode, PD) that can detect optical energy, for example, an InGaAs PD, an InP PD, or a germanium PD. Correspondingly, the detection unit may be an InGaAs PD array, an InP PD array, or the like.

In some scenarios, when the detection unit includes a plurality of detection elements, the plurality of detection elements may be arranged in an array manner. For example, 10 detection elements may be arranged to form a 1×10 array, a 2×5 array, or the like. In this case, the detection unit may also be referred to as an array detector]

Optionally, the detection unit may be disposed at an edge outside the optical signal processing apparatus. When the detection unit is disposed outside, a volume of the optical signal processing apparatus is small and the optical signal processing apparatus is easy to process. For example, the optical signal processing apparatus and the detection unit may be separately processed. Subsequently, the detection element is mounted at an edge of the optical signal processing apparatus, so that the detection element can process an output result of the optical signal processing apparatus. Certainly, mounting is merely an example of an inheritance manner, and may alternatively be replaced with a flip-mounted manner, a patch manner, or the like.

Alternatively, the detection element in the detection unit may be integrated into the optical signal processing apparatus. For example, in an on-chip integration manner, the plurality of detection elements are processed and coupled together with a chip (or a material platform). An example in which the optical signal processing apparatus is implemented through a silicon photonics chip is used. The silicon photonics chip includes an integrally processed germanium PD.

The detection element is disposed in the optical signal processing apparatus, so that a topology structure of the optical signal apparatus can be optimized. This structure effectively avoids waveguide crossing, and can basically implement a solution without crosstalk or with low crosstalk, to improve a signal detection capability and reduce a discriminative threshold.

### [Design 11]

In a possible implementation, when there are a plurality of lasers, return signals may include reflection of signal light from the plurality of lasers. When the return signal light is processed, optical splitting needs to be performed on the return signal light, so that the return signal light is separately frequency-mixed with local oscillation signal light from the plurality of lasers. Optionally, signal light corresponding to different lasers may be separated through optical splitting.

The following uses an example in which the lasers include a first laser and a second laser, to describe a processing process of the return signal light. It should be understood that, when a beam splitter can obtain signal light of different properties through separation, this process may also be referred to as a demultiplexing process. In this application, uniformly, beam splitting is used as an example for description, and this is also applicable to a case of demultiplexing.

**In a possible solution,** the optical signal processing apparatus further includes a third beam splitting unit and a frequency mixing unit.

The third beam splitting unit is configured to split return signal light into first sub return signal light and second sub return signal light. The frequency mixing unit is configured to: frequency-mix the first sub return signal light and first sub local oscillation signal light to obtain a first frequency mixing result, and frequency-mix the second sub return signal light and second sub local oscillation signal light to obtain a second frequency mixing result. The first sub local oscillation signal light is from the first laser, and the second sub local oscillation signal light is from the second laser.

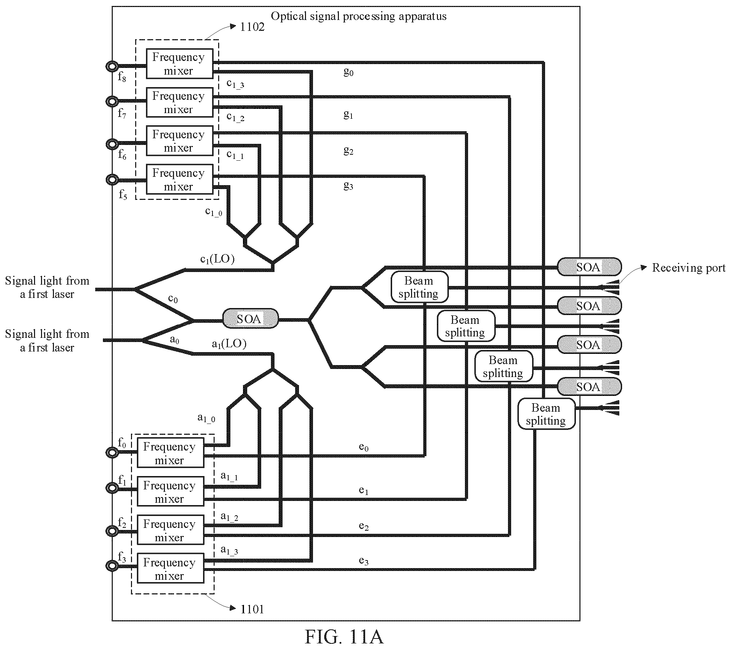

For example, FIG. 11A is a diagram of another possible optical signal processing apparatus according to an embodiment of this application. The optical signal apparatus divides the signal light from the first laser into two parts, namely, sub signal light a₀ and sub signal light a₁, and divides the signal light from the second laser into two parts, namely, sub signal light c₀ and sub signal light c₁. The sub signal light a₀ and the sub signal light c₀ are used as detection signal light, and are emitted after being amplified by a beam combining unit, a second beam splitting unit, and a plurality of stages of amplification units (for example, SOAs). The sub signal light a₁ and the sub signal light c₁ are respectively used as first sub local oscillation signal light and second sub local oscillation signal light. Further, the first sub local oscillation signal light (a₁) may be further optically split to obtain pieces of signal light a_{1_0}, a_{1_1}, a_{1_2}, and a_{1_3}, and the second sub local oscillation signal light (c₁) may be further optically split to obtain pieces of signal light c_{1_0}, c_{1_1}, c_{1_2}, and c_{1_3}.

A receiving port receives return signal light. After each path of return signal light is beam-split by a third beam splitting unit (which includes four "demultiplexing" modules), the path of return signal light is split into two paths of sub return signal light, and the two paths of sub return signal light are respectively frequency-mixed with two paths of local oscillation signal light (the first sub local oscillation signal light and the second sub local oscillation signal light). Alternatively, the plurality of demultiplexing modules in this application may be replaced with beam splitters, for example, beam splitters for wavelength beam splitting or beam splitters for energy beam splitting.

As shown in FIG. 11A, pieces of first sub return signal light may include e₀, e₁, e₂, and e₃, and pieces of second sub return signal light may include g₀, g₁, g₂, and g₃. For example, a frequency mixing unit 1101 includes four beam splitters, configured to perform frequency mixing on the first sub return signal light and the first sub local oscillation signal light, and the sub return signal light e₀ is frequency-mixed with the first sub local oscillation signal light a_{1_0}, to obtain a frequency mixing result f₀. A frequency mixing unit 1102 includes four beam splitters, configured to perform frequency mixing on the second sub return signal light and the second sub local oscillation signal light, and the sub return signal light g₀ is frequency-mixed with the second sub local oscillation signal light c_{1_3}, to obtain a frequency mixing result f₈. Other cases may be deduced by analogy. For details, refer to FIG. 11A.

**In another possible solution,** beam combining may be performed on the local oscillation signal light through a beam combining unit, that is, the local oscillation signal light includes the signal light from the first laser and the signal light from the second laser. In this case, the optical signal processing apparatus further includes a fourth beam splitting unit, and the fourth beam splitting unit is configured to demultiplex the local oscillation signal light to obtain the first sub local oscillation signal light and the second sub local oscillation signal light, where the first sub local oscillation signal light is used as a local oscillation signal of the signal light from the first laser, and the second sub local oscillation signal light is used as a local oscillation signal of the signal light from the second laser.

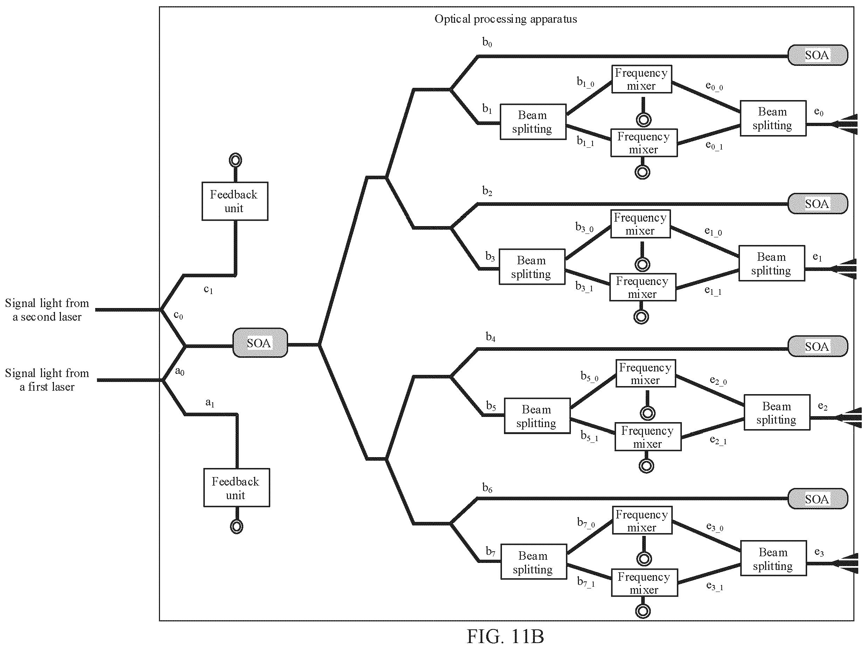

For example, FIG. 11B is a diagram of another possible optical signal processing apparatus according to an embodiment of this application. The optical signal apparatus divides the signal light from the first laser into two parts, namely, sub signal light a₀ and sub signal light a₁, and divides the signal light from the second laser into two parts, namely, sub signal light c₀ and sub signal light c₁. The sub signal light a₀ and the sub signal light c₀ are beam-combined and then beam-split to obtain a plurality of pieces of second signal light, for example, represented as b₀, b₁, b₂, b₃, b₄, b₅, b₆, and b₇. b₀, b₂, b₄, and b₆ are emitted. b₁, b₃, b₅, and b₇ are used as pieces of local oscillation signal light, and are processed by the fourth beam splitting unit (which includes four "beam splitting" modules) to separately obtain first sub local oscillation signal light and second sub local oscillation signal light. For example, pieces of first sub local oscillation signal light respectively include b_{1_0}, b_{3_0}, b_{5_0}, and b_{7_0}, and pieces of second sub local oscillation signal light respectively include b_{1_1}, b_{3_1}, b_{5_1}, and b_{7_1}.

A receiving port receives return signal light. For example, pieces of return signal light include e₀, e₁, e₂, and e₃, and each path of return signal light separately passes through a third beam splitting unit (which includes four "beam splitting" modules) to obtain first sub return signal light and second sub return signal light. For example, pieces of first sub return signal light include e_{0_0}, e_{1_0}, e_{2_0}, and e_{3_0}, and pieces of second sub return signal light include e_{0_1}, e_{1_1}, e_{2_1}, and e_{3_1}.

For example, the sub return signal light e_{0_0} is frequency-mixed with the first sub local oscillation signal light b_{1_0} to obtain a frequency mixing result, and the sub return signal light e_{0_1} is frequency-mixed with the first sub local oscillation signal light b_{1_1} to obtain a frequency mixing result. Other cases may be deduced by analogy. For details, refer to FIG. 11B.

It should be noted that, in embodiments of this application, beam splitting performed on the return signal light may be energy beam splitting or wavelength beam splitting. In addition, "demultiplexing" described in some embodiments may alternatively be replaced with "beam splitting".

**In another possible solution,** the return signal light may be optically split by an optical element and then received by the receiving port.

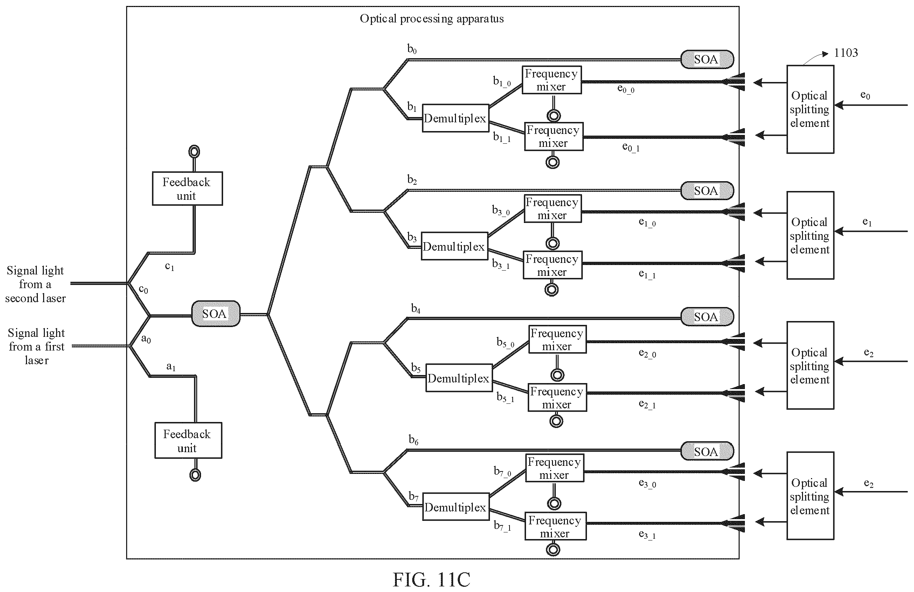

For example, FIG. 11C is a diagram of another possible optical signal processing apparatus according to an embodiment of this application. For related descriptions of an emitting part of the signal light, refer to FIG. 11B. Details are not described herein again.

An example of processing return signal light is as follows: Pieces of signal light e₀, e₁, e₂, and e₃ are optically split by an optical module (which, for example, includes four optical splitting elements 1103), and each path is split into two paths of sub signal light. A receiving port receives sub return signal light, to obtain four pieces of first sub return signal light and four pieces of second sub return signal light. As shown in the figure, the pieces of first sub return signal light include e_{0_0}, e_{1_0}, e_{2_0}, and e_{3_0}, and the pieces of second sub return signal light include e_{0_1}, e_{1_1}, e_{2_1}, and e_{3_1}.

For example, the sub return signal light e_{0_0} is frequency-mixed with the first sub local oscillation signal light b_{1_0} to obtain a frequency mixing result, and the sub return signal light e_{0_1} is frequency-mixed with the first sub local oscillation signal light b_{1_1} to obtain a frequency mixing result. Other cases may be deduced by analogy. For details, refer to FIG. 11B.

The optical splitting element 1103 may be a grating, an interferometer, or the like, for example, a WDM, an AWG, an MMI, and a DC.

Optionally, FIG. 11C is illustrated by using an example in which a plurality of optical splitting elements 1103 perform optical splitting. In a specific implementation process, overall beam splitting may also be performed on signal light from a field of view, to obtain signal light that can be received by a plurality of receiving elements.

It should be understood that a quantity of emitting channels and a quantity of receiving channels provided in embodiments of this application are merely examples, and more or fewer channels may be included in a specific implementation process. For example, emergent signal light on four channels, return signal light on eight channels, and the like shown in FIG. 11C are merely examples. In addition, arrangement of the output ports (for example, emergent end faces of the SOAs) and the receiving ports shown in FIG. 11C is merely an example. Another arrangement manner is also applicable to the design of "the return signal light may be optically split by an optical element and then received by the receiving port".

**In another possible solution,** the signal light received by the receiving port may include signal light that can be used as a local oscillator. In this case, the signal light received by the receiving port may pass through the beam splitter, to separate two groups of pieces of signal light, and the two groups of pieces of signal light may respectively correspond to different lasers. The two groups of pieces of signal light respectively enter different detection units for detection, and no additional frequency mixing is required.

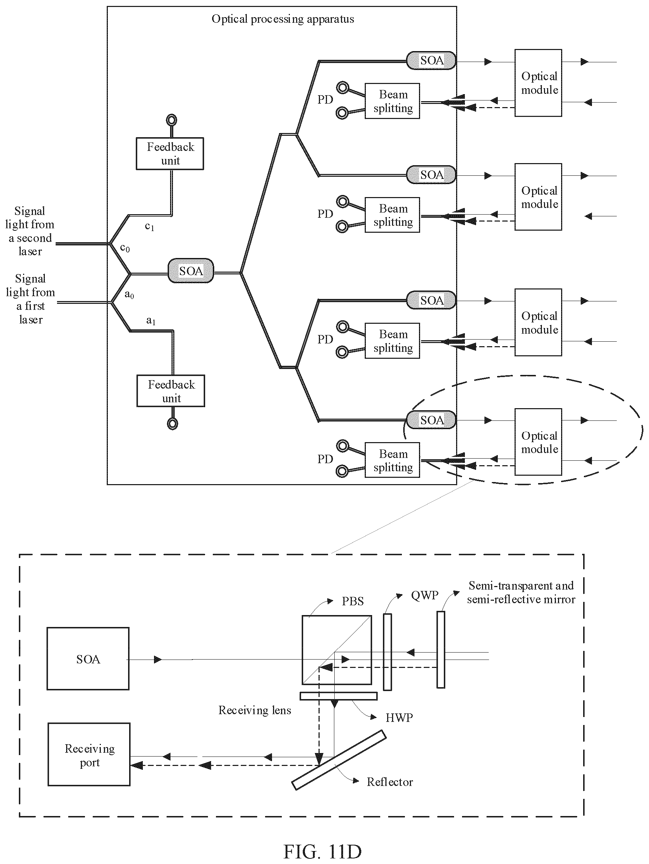

For example, FIG. 11D is a diagram of another possible optical signal processing apparatus according to an embodiment of this application. For related descriptions of an emitting part of the signal light, refer to the foregoing descriptions. Details are not described herein again. Signal light output by an output port (for example, an emergent end face of an SOA) passes through an optical module. The optical module includes an optical element that performs partial reflection and partial transmission, and may partially reflect the output signal light.

As shown in FIG. 11D, the optical module includes a PBS, a QWP, a semi-transparent and semi-reflective mirror, an HWP (optional), a reflector (optional), and the like. The signal light output by the output port passes through the PBS, the QWP, and the semi-transparent and semi-reflective mirror. About half of the signal light passes through the semi-transparent and semi-reflective mirror, and half of the signal light is reflected. The reflected signal light passes through the QWP again. Because a polarization direction changes after passing through the QWP twice, the signal light reflected by the semi-transparent and semi-reflective mirror is reflected when passing through the PBS again, and reaches the receiving port through the HWP (optional) and the reflector (optional). The signal light reflected by the semi-transparent and semi-reflective mirror may be used as the local oscillation signal light.

Further, the return signal light from the field of view passes through the QWP and the PBS, is reflected when passing through the PBS, and reaches the receiving port through the HWP (optional) and the reflector (optional).

In a possible implementation, the signal light received by the receiving port includes the local oscillation signal light and the return signal light. Therefore, the signal light received by the receiving port may be considered as signal light on which frequency mixing is performed. Because both the local oscillation signal light and the return signal light include signal light from two lasers, in this case, the beam splitter may perform beam splitting on the signal light received by the receiving port, so that a plurality of sampling points can be obtained based on one piece of return signal light, and a resolution is improved.

Further, the signal light on which beam splitting is performed may be input into the input port of the detection unit for further processing. Optionally, in this embodiment of this application, a reflection ratio of the optical element that performs partial reflection and partial transmission is not limited. For example, this solution is applicable to an optical splitting ratio of semi-transmission and semi-reflection, a ratio of 70% transmission and 30% reflection, or the like. The semi-transparent and semi-reflective mirror shown in FIG. 11D is merely an example.

### [Design 12]

Because there are a plurality of output ports and a plurality of output ports, there may be a plurality of possible designs for arrangement of the receiving port and the reflection port of the optical signal processing apparatus. The following lists several possible cases as examples.

**Case 1:** The plurality of receiving ports are arranged by column to form a receiving port group, the plurality of output ports are arranged by column to form an output port group, the receiving port group and the output port group are disposed opposite to each other, and one output port and at least one receiving port are disposed opposite to each other and share one optical module.

The relative setting may be that the devices are installed in opposite directions (or have surfaces facing each other), or may be that the devices are installed in a same direction but are opposite in spatial locations.

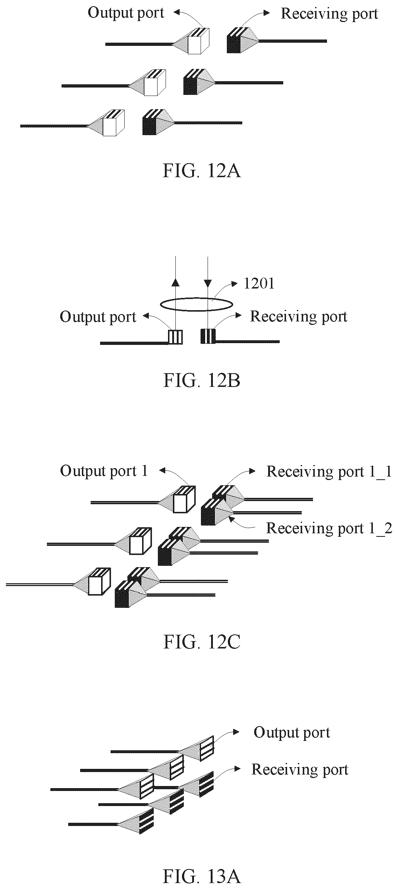

In an example in which a receiving port and an output port are disposed opposite to each other, FIG. 12A is a diagram in which a receiving port and an output port are disposed opposite to each other according to an embodiment of this application. The output port and the receiving port are disposed opposite to each other from left to right. For example, FIG. 12B is a diagram of an optical path according to an embodiment of this application. Signal light is transmitted on side surfaces of surfaces that are opposite to an emitting end face and a receiving end face, and detection signal light output by an output port and signal light received by a receiving port pass through a same optical module 1201. Because both the output signal light and the received signal light pass through the optical module, the optical module 1201 may also be referred to as an optical transceiver module.

It should be noted that FIG. 12A and FIG. 12B are described by using an example in which one output port corresponds to one receiving port. In a specific implementation process, one output port may also correspond to a plurality of receiving ports. For example, FIG. 12C is a diagram in which a receiving port and an output port are disposed opposite to each other according to an embodiment of this application. One output port corresponds to two receiving ports. For example, an output port 1 corresponds to a receiving port 1_1 and a receiving port 1_2, and the output port 1 is disposed opposite to the receiving port 1_1 and the receiving port 1_2. Further, the receiving port 1_1 and the receiving port 1_2 are closely arranged, and the output port 1, the receiving port 1_1, and the receiving port 1_2 share one optical transceiver module.

Optionally, the receiving port 1_1 and the receiving port 1_2 may obtain two paths of echo signals, and the two paths of echo signals also correspond to two paths of local oscillation signals during frequency mixing, and are frequency-mixed with respective corresponding frequency mixing signals.

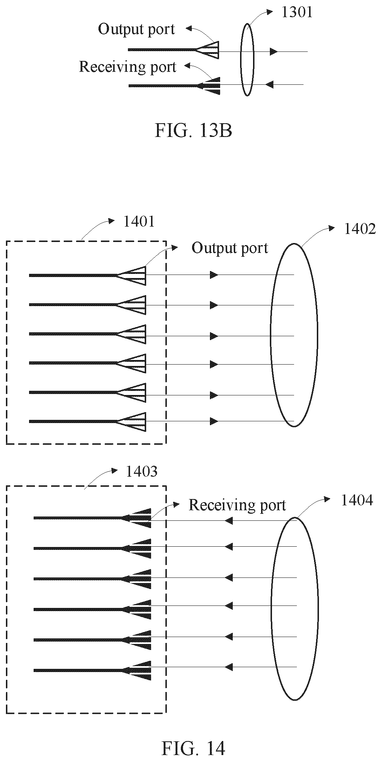

In an example in which a receiving port and an output port are disposed opposite to each other, FIG. 13A is another diagram in which a receiving port and an output port are disposed opposite to each other according to an embodiment of this application. The output port and the receiving port are disposed opposite to each other from upper to lower. For example, FIG. 13B is a diagram of another optical path according to an embodiment of this application. The output port and the receiving port are disposed opposite to each other from upper to lower. Signal light is transmitted on an emitting end face and a receiving end face, and signal light output by the output port and signal light received by the receiving port pass through a same optical module 1301.

Optionally, there may be a plurality of optical modules. For example, a quantity of optical modules is the same as a quantity of receiving ports or a quantity of output ports. In this case, one receiving port and one output port share one optical module, and another receiving port and another output port share another optical module.

Alternatively, optionally, there may be only one optical module, and a plurality of receiving ports and a plurality of output ports share one optical module.

Optionally, an optical path for detecting the signal light and an optical path for receiving the signal light may be coaxial or off-axis.

**Case 2:** The plurality of receiving ports are arranged by column to form a receiving port group, the plurality of output ports are arranged by column to form an output port group, the receiving port group shares one optical receiving module, and the output port group shares one optical emitting module.

For example, FIG. 14 is another diagram of an output port and a receiving port according to an embodiment of this application. An output port group 1401 includes a plurality of output ports, and a receiving port group 1403 includes a plurality of receiving ports. The plurality of output ports share one optical module 1402, and the plurality of receiving ports share one optical module 1404.

**Case 3:** An output port group includes a plurality of output ports, and a spacing between the plurality of output ports may be designed, so that a spacing between a part of output ports is small, thereby improving detection accuracy of a part of regions in a field of view.

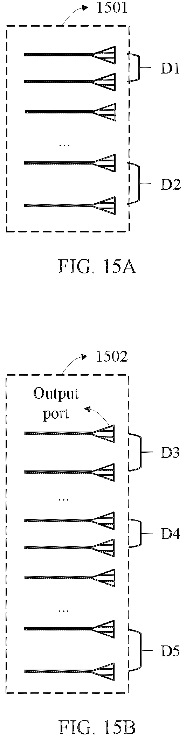

In a possible implementation, a spacing between output ports in an upper part is less than a spacing between output ports in a lower part. For example, FIG. 15A is a diagram of a possible output port according to an embodiment of this application. An output port group 1501 includes a plurality of output ports. A spacing between output ports in an upper part is D1, a spacing between output ports in a lower part is D2, and D1<D2. Certainly, in different usage scenarios, D1<D2 may alternatively be designed.

In another possible implementation, a spacing between output ports in a middle part is less than a spacing between output ports in an edge part. For example, FIG. 15B is a diagram of a possible output port according to an embodiment of this application. An output port group 1502 includes a plurality of output ports. A spacing between output ports in an upper part is D3, a spacing between output ports in a middle part is D4, a spacing between output ports in a lower part is D5, D4<D3, and/or D4<D5.

In consideration of a possible scenario, detection signal light emitted by the output port in the upper part points to an upper part of the field of view region, detection signal light emitted by the output port in the middle part points to a middle part of the field of view region, and detection signal light emitted by the output port in the lower part points to a lower part of the field of view region. When the field of view of the optical signal processing apparatus is in front of a vehicle, because an upper part of the field of view region in front of the vehicle is usually a building or the sky, a lower part of the field of view region is a short-distance ground, and the middle part of the field of view region is a long-distance ground in front of the vehicle, output ports pointing to the middle part of the field of view region are densely arranged, so that a resolution of a detection result in the middle part of the field of view region can be improved, and detection accuracy can be improved, thereby facilitating subsequent target recognition or self-driving decision-making, and improving availability of the detection result.

Optionally, a size between D3 and D5 may be designed based on an actual requirement. For example, D5<D3. For example, in the foregoing vehicle traveling scenario, a degree of interest in the lower part of the field of view is higher than that in the upper part of the field of view. In this case, the spacing between output ports in the lower part may be designed to be less than the spacing between output ports in the upper part.

Certainly, in different usage scenarios, D3>D5, D3=D5, and the like may alternatively be designed. In conclusion, the spacing between output ports may be designed by using the plurality of output ports for emission, so that a detection resolution and detection accuracy meet a detection requirement, and detection performance is improved.

### [Design 13]

As mentioned above, in the optical signal processing apparatus in this application, transceiver paths may be coaxial or off-axis. The following describes a design of coaxial optical paths and a design of off-axis optical paths.

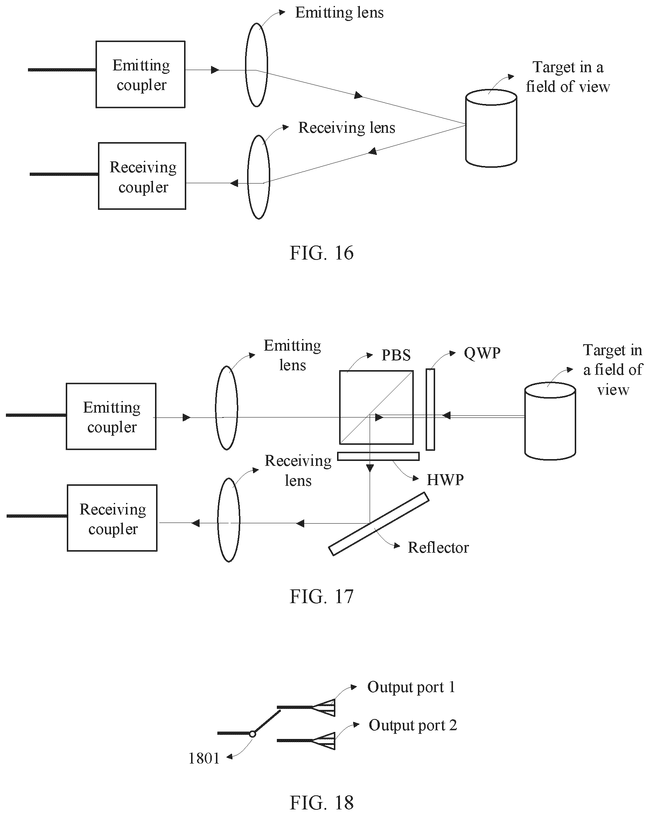

For example, FIG. 16 is a diagram of possible off-axis optical paths according to an embodiment of this application. Signal light is emitted by an emitting (transmitter, Tx, also referred to as detection) coupler (coupler) to form detection signal light, and the detection signal light is irradiated by an emitting lens (Tx lens) to a target in a field of view, to generate reflection and form return signal light. The return signal light is received by a receiving coupler (Rx coupler) through a receiving (Receiver, Rx) lens. An optical axis of the detection signal light is different from that of the reflected signal light.

For example, FIG. 17 is a diagram of possible coaxial optical paths according to an embodiment of this application. Detection signal light is emitted to space through an emitting coupler, passes through an emitting lens and a PBS, and is transmitted to a quarter wave plate. In this case, a polarization direction of the detection signal light is P polarization. The quarter wave plate (quarter wave plate, QWP) changes the polarization direction of the detection signal light, and converts linearly polarized light into circularly polarized light. Therefore, the detection signal light that passes through the quarter wave plate is circularly polarized light. The circularly polarized light is irradiated to a target in a field of view and generates reflection, and return signal light (which is still the circularly polarized light) is formed. When the return signal light passes through the quarter wave plate again, the polarization direction changes, and the return signal light whose polarization direction is S polarization is formed. The return signal light of S polarization is reflected after passing through the PBS, and reaches a receiving coupler through a receiving lens. An optical axis of the detection signal light is the same that of the reflected signal light.

Optionally, the detection signal light is P-polarized light.

Alternatively, in embodiments of this application, the QWP may be replaced with one or more of two eighth wave plates, a Faraday rotator mirror, a combination of a Faraday rotator mirror and a wave plate, a combination of a quarter wave plate and a half wave plate, or the like.

In a possible implementation solution, a half wave plate (half wave plate, HWP) may alternatively be disposed on an optical path between the PBS and the receiving coupler, and the HWP converts the return signal light of S polarization into return signal light of P polarization, so that the signal light output by the optical signal processing apparatus to the space and the received signal light have a same polarization direction. This facilitates subsequent optical path processing.

In addition, in some scenarios, waveguides have different polarization maintaining properties. Therefore, the signal light transmitted in the optical signal processing apparatus has a consistent polarization direction. This facilitates a design of an optical path and waveguide procurement, and reduces complexity of the design of the optical path.

It should be understood that one or more reflectors (or optical elements having a reflection function) may alternatively be disposed on the optical path, to change a propagation direction of the signal light. A quantity of reflectors and a location at which the reflector is disposed are not limited in this application.

Certainly, FIG. 16 and FIG. 17 are examples for describing concepts of coaxial and off-axis, and are not intended to limit in this application that the coaxial and off-axis solutions are definitely implemented in the foregoing manner.

### [Design 14]

This is not limited to the foregoing design. In another possible design, the optical signal processing apparatus further includes an optical switch, and the optical switch is configured to control connection and disconnection of an optical transmission path.

In a possible solution, the optical switch is included before at least one output port, and the optical switch is configured to gate several output ports in the at least one output port.

For example, FIG. 18 is a diagram of a possible optical switch according to an embodiment of this application. When the optical switch 1801 is switched to an upper part, an optical path is formed between the optical switch 1801 and an output port 0, that is, the output port 0 is gated. When the optical switch is switched to a lower part, an optical path is formed between the optical switch 1801 and an output port 1, that is, the output port 1 is gated.

It should be understood that the optical switch may be coupled to a plurality of optical paths in the optical signal processing apparatus. For example, the optical switch may be disposed between a second beam splitting unit and an output port, to control whether to form a channel between the second beam splitting unit and the output port.

In some possible scenarios, there may be a plurality of optical switches. For example, an optical route is formed through the plurality of switches, so that one or more channels are gated in a plurality of channels.

In a possible implementation, the optical switch performs switching between channels of a plurality of output ports, and a quantity of emitting channels is increased through time multiplexing. In addition, the emitting channel is switched through the optical switch, so that emergent optical power of each channel is not lost, thereby ensuring light emitting power of each emitting channel.

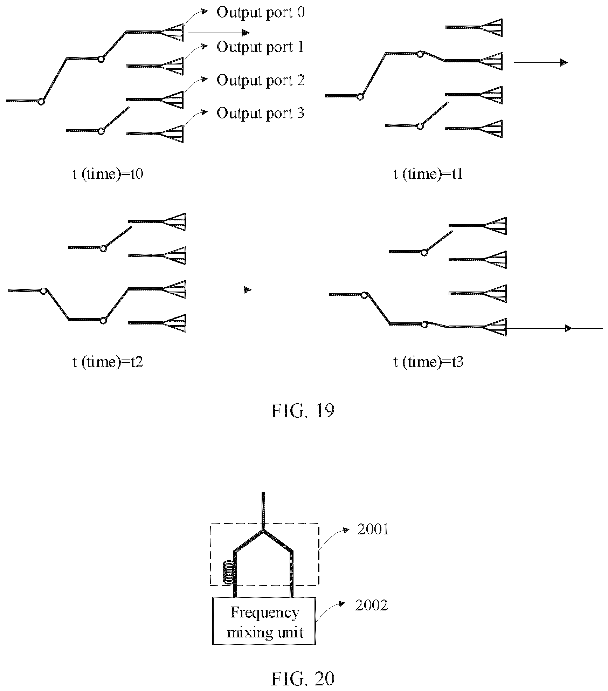

FIG. 19 is a diagram of another possible optical switch according to an embodiment of this application. For example, the optical switch gates four output ports. At a moment t0, a plurality of optical switches gate an output port 0; at a moment t1, a plurality of optical switches gate an output port 1; at a moment t2, a plurality of optical switches gate an output port 2; and at a moment t3, a plurality of optical switches gate an output port 3.

The optical switch is used, so that the plurality of output ports are sequentially gated based on a preset sequence. In comparison with simultaneous gating of all output ports, requirements for a quantity of SOAs and output power can be reduced. Further, in this solution, the output port may also be flexibly gated based on a requirement for a resolution or detection performance. This improves availability.

### [Design 15]

This is not limited to the foregoing design. In another possible design, the optical signal processing apparatus further includes a feedback unit. An input of the feedback unit is a part of pieces of signal light from a laser, and the feedback unit is configured to detect, based on the feedback signal light, frequency sweep information and/or phase noise of the signal light from the laser.

An output (namely, a feedback result) of the feedback unit may be one or more paths of signal light. Optionally, the output of the feedback unit may be provided for a detection unit, and the detection unit may obtain an electrical signal based on the feedback result from the feedback unit. The electrical signal may be used to obtain the frequency sweep information and/or the phase noise of the signal light from the laser.

As shown in FIG. 10A, in a plurality of pieces of sub signal light, sub signal light a3 is used as the feedback signal light and is input into the feedback unit.

For example, FIG. 20 is a diagram of a possible feedback unit according to an embodiment of this application. The feedback unit includes a beam splitting unit 2001 and a frequency mixing unit 2002.

After being input into the beam splitting unit 2001, signal light is split into two paths. The beam splitting unit 2001 includes two optical paths with unequal lengths, and the two paths of signal light are input into the frequency mixing unit 2002 after passing through the two optical paths with unequal lengths. The frequency mixing unit 2002 may perform frequency mixing on the two paths of signal light, to obtain one or more feedback results.

Further, the one or more feedback results output by the frequency mixing unit 2002 may be received by a detection element of a detection unit.

Optionally, the beam splitting unit 2001 may include an asymmetric Mach-Zehnder interferometer (asymmetric Mach-Zehnder interferometer, AMZI). The frequency mixing unit 2002 includes one in-phase/quadrature (In-phase/Quadrature, I/Q or IQ) frequency mixer such as a 2×4 (two inputs and four outputs) MMI, or includes one frequency mixer such as a 2×2 (two inputs and two outputs) MMI.

The detection unit may include a plurality of detection elements, and a part of the plurality of detection elements may receive the signal light output by the feedback unit. For example, the frequency mixing unit 2002 includes one frequency mixer such as a 2×4 MMI. Therefore, the frequency mixing unit outputs four paths of signal light, and the four paths of signal light may be respectively received by four detection elements.

### [Design 16]

This is not limited to the foregoing design. In another possible design, the optical signal processing apparatus is implemented through a chip or a material platform, and the chip and/or the material platform include/includes different layers.

Optionally, optical paths for transmitting the local oscillation signal light and the return signal light are located at different layers of the substrate, and/or optical paths for transmitting the feedback signal light and the return signal light are located at different layers of the substrate.

**The foregoing describes some possible designs in embodiments of this application. In a specific implementation process, the foregoing plurality of designs may be further combined. The following describes a case in which some designs are combined by using an example. It should be understood that for modules and logic that are not explained in the following manners, refer to the foregoing basic structure and possible designs.**

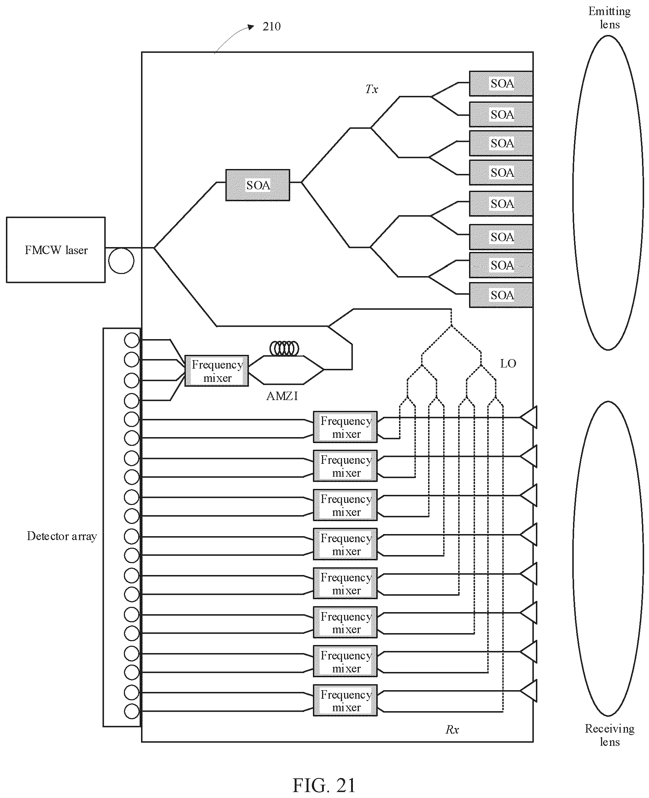

For example, FIG. 21 is an application diagram of a possible optical signal processing apparatus 210 according to an embodiment of this application. After a linear frequency sweep laser light emitted by an FMCW laser is coupled into an optical waveguide, the laser light is split into three beams through a first beam splitting unit, where one beam is used as detection signal light (Tx), is amplified by an SOA, and is beam-split by a second beam splitting unit and then emitted; one beam is used as feedback signal light and is input into an AMZI; and after being optically split, the last beam is used as local oscillation (LO) signal light and is frequency-mixed with return signal light (Rx).

The optical signal processing apparatus 210 processes the detection signal light as follows: After being amplified by a first-stage SOA, the detection signal light is split into eight beams through the second beam splitting unit, and the eight beams enter a second-stage SOA through a tail end of the second beam splitting unit. After being amplified, the eight beams are emitted by emergent end faces of SOAs, to form detection signal light on eight channels. Power of detection signal light on each channel is output optical power of the second-stage SOA.

The optical signal processing apparatus 210 processes the feedback signal light as follows: The feedback signal light is input into the AMZI, and the feedback signal light is split into two paths of signal light through the AMZI. After passing through two optical paths with different lengths, the two paths of signal light are received and detected by four PDs after one IQ frequency mixer such as a 2×4 MMI, or are received by two PDs after one frequency mixer such as a 2×2 MMI.

The optical signal processing apparatus 210 processes the local oscillation signal light as follows: The local oscillation signal light is split by a beam splitter into local oscillation channels (namely, local oscillation signal light on eight channels) whose quantity is the same as that of emitting channels, and are in one-to-one correspondence with receiving channels (namely, return signal light on eight channels). The beam splitter herein may include an MMI, a DC, or the like, and can implement equal or unequal splitting of optical energy.

The local oscillation signal light on eight channels and the return signal light on eight channels are input into the frequency mixing unit for frequency mixing. The frequency mixing unit may include a plurality of frequency mixers, and the frequency mixer is, for example, a 2×2 MMI, a 2×4 MMI, or an IQ frequency mixer. One frequency mixer is configured to perform frequency mixing on one piece of local oscillation signal light and one piece of return signal light, and output one or more (for example, two) frequency mixing results, and the frequency mixing result may be received by the PD.

In a possible case, each of the three beams of signal light obtained through splitting by the first beam splitting unit needs to meet a preset energy requirement. If energy of a light source is insufficient, one stage of an SOA may be added before the first beam splitting unit, so that the signal light is amplified by the SOA and then input into the first beam splitting unit. Alternatively, the signal light is beam-split by the first beam splitting unit first, and then is amplified on a subsequent optical path.

Optionally, the first beam splitting unit and/or the second beam splitting unit may be formed by cascading at least one one-to-two beam splitter, or may be formed by cascading at least one one-to-three beam splitter. Further, optionally, the signal light beam-split by the beam splitter may be designed to meet a specific ratio requirement.

In the optical signal processing apparatus shown in FIG. 21, the local oscillation signal light and the return signal light are frequency-mixed in waveguides, and the waveguide for propagating the local oscillation signal light and the waveguide for propagating the return signal light may cross. Because the optical signal processing apparatus may be of a multi-layer structure, in a possible solution, the waveguide for propagating the local oscillation signal light or a waveguide for propagating feedback signal light and a waveguide for propagating an echo may be at a same layer, or may be conducted at different layers. It is noted that the layers are described herein as layered waveguides in a vertical direction. For example, as shown in FIG. 21, waveguides represented by solid lines are at the first layer, and waveguides represented by dashed lines are at the second layer.

Optionally, a detector array includes a plurality of detection elements, and the detection element may be a PD that can detect optical energy. The detector array may be an InGaAs PD array, an InP PD array, or the like coupled to a silicon photonics chip in an encapsulation manner, a flip-mounted manner, or the like, or may be a germanium PD that is integrated with a silicon photonics chip.

As shown in FIG. 21, an edge coupler is used as a receiving coupler, and the return signal light converged by a receiving lens is coupled into an optical waveguide for frequency mixing. A quantity of receiving couplers is the same as that of emitting SOAs. A return signal of detection signal light output by a specific emitting channel can be received by a receiving coupler at a corresponding location.

In the embodiment shown in FIG. 21, an emitting part uses a group of light sources for optical splitting to form linear array emission, and performs amplification on power of the signal light by a plurality of stages of SOAs, so that power of each channel can be ensured while a quantity of channels is increased. In addition, the SOA may also adjust power and control optical emitting channel selection. This improves flexibility of a design of an emitting linear array. Further, the signal light is transmitted by using a waveguide, and integration between the amplifier and the silicon photonics chip is implemented in a manner of hybrid integration, heterogeneous integration, or encapsulation and coupling, so that a volume can be significantly reduced and stability can be improved.

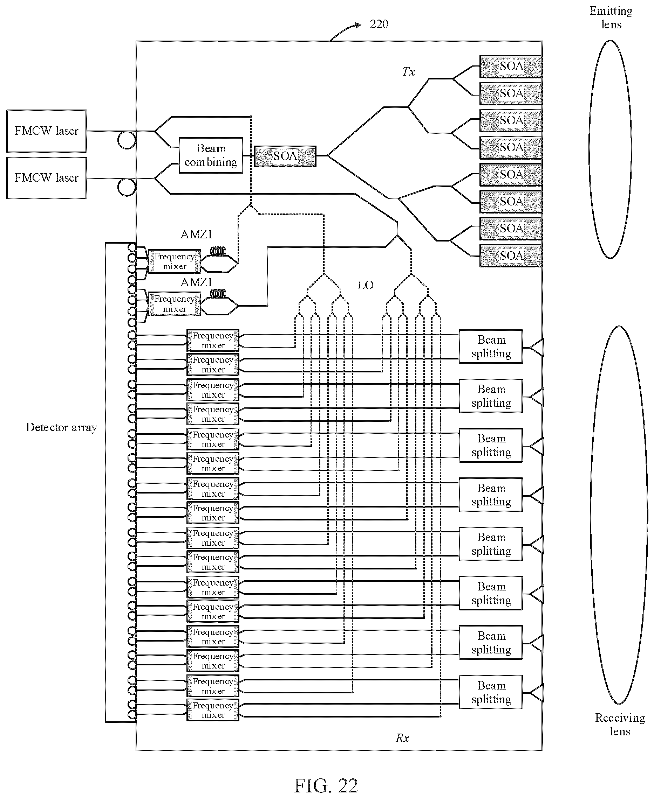

FIG. 22 is an application diagram of another possible optical signal processing apparatus according to an embodiment of this application. As shown in FIG. 22, FMCW laser light emitted by two FMCW lasers is separately coupled into an optical waveguide, and the two pieces of FMCW laser light are separately split into three beams through a first beam splitting unit, where the three beams are respectively detection signal light (Tx), feedback signal light, and local oscillation signal light (LO). Optionally, each beam of signal light may be directly optically split, or may be optically split after being amplified by an SOA.

The optical signal processing apparatus 220 processes the detection signal light as follows: Pieces of detection signal light separately obtained by optically splitting the two pieces of FMCW light are input into a beam combiner, are amplified by a plurality of stages of SOAs and beam-split after being combined by the beam combiner, and finally are emitted after being amplified by a last-stage SOA of an output port. The beam combiner may be a multi-wavelength beam combiner, a power beam combiner, or the like. In FIG. 22, a circle after the FMCW laser light represents a coupler, namely, an input port of the optical signal processing apparatus, and is configured to receive the signal light from the laser.

The optical signal processing apparatus 220 processes the feedback signal light as follows: Two beams of feedback signal light are respectively input into respective AMZIs, each AMZI is configured to measure information such as frequency sweep information and phase noise of the laser, and parameters of the AMZI may be different based on settings of respective light sources. For detailed descriptions, refer to the related descriptions in FIG. 21.

The optical signal processing apparatus 220 processes the local oscillation signal light as follows: Two pieces of local oscillation signal light are split into pieces whose quantity is the same as that of receiving channels, and are frequency-mixed with respective corresponding return signal light. As shown in FIG. 21, the receiving coupler receives return signal light formed by reflecting, on a target surface, emergent laser light formed after two light sources are beam-combined. The return signal light includes reflection of the FMCW laser light from the two lasers. The return signal light is received by the receiving coupler, coupled into the optical waveguide, and then split into two parts by the beam splitter. One part includes reflection of FMCW laser light from a first laser, and therefore is frequency-mixed with local oscillation signal light from the first laser. The other part includes reflection of FMCW laser light from a second laser, and therefore is frequency-mixed with local oscillation signal light from the second laser. For example, the beam splitter for separating the return signal light herein may be a wavelength beam splitting device such as an AWG or a WDM, or may be a power beam splitting device such as a 1×2 MMI.

It should be understood that the feedback signal light and the local oscillation signal light are optically split by the two FMCW lasers. An optical splitting location may be before the first-stage SOA based on a power requirement, as shown in FIG. 22. Alternatively, the optical splitting location may be after the first-stage SOA.

For other related descriptions, refer to the foregoing descriptions in FIG. 21, or refer to the foregoing plurality of designs.

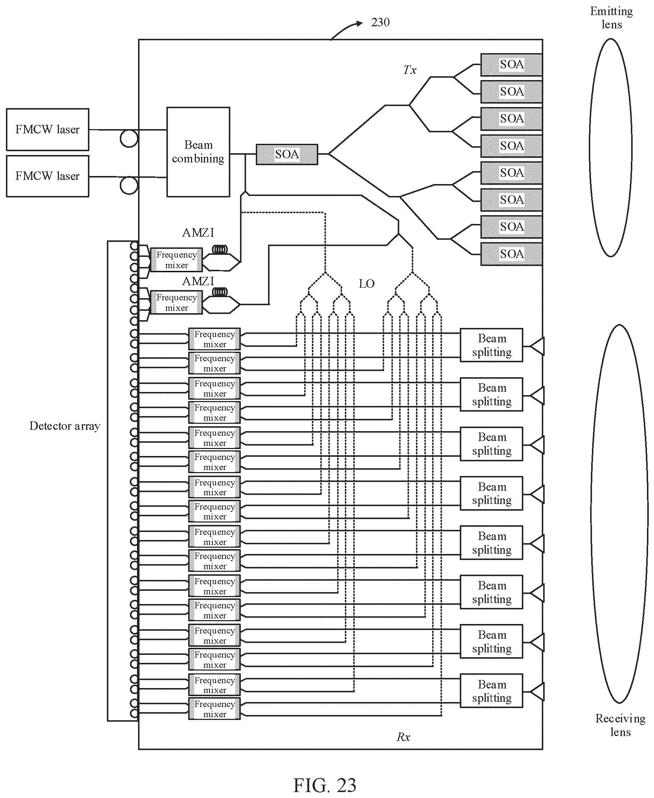

FIG. 23 is an application diagram of another optical signal processing apparatus according to an embodiment of this application. In FIG. 23, a first laser and a second laser have different properties. After beam combining is performed on signal light from the first laser and signal light from the second laser, the optical signal processing apparatus 230 outputs local oscillation signal light (LO) and feedback signal light (namely, signal light input into an AMZI). Signal light from different lasers can be distinguished by using light properties. For example, the signal light from the first laser and the signal light from the second laser may be distinguished by using different frequency sweep slopes. For example, the signal light from the first laser and the signal light from the second laser may be distinguished by using different wavelengths.

Optionally, the local oscillation signal light that is output after beam combining is performed may be beam-split, to be separately frequency-mixed with return signal light (Rx) after beam splitting is performed. The beam splitting herein includes but is not limited to wavelength beam splitting, energy beam splitting, or the like.

Similarly, the feedback signal light that is output after beam combining is performed may also be separately input into two feedback units after beam splitting is performed.

For related descriptions of components, optical paths, and the like in the optical signal processing apparatus 230, refer to the descriptions in FIG. 21 or FIG. 22.

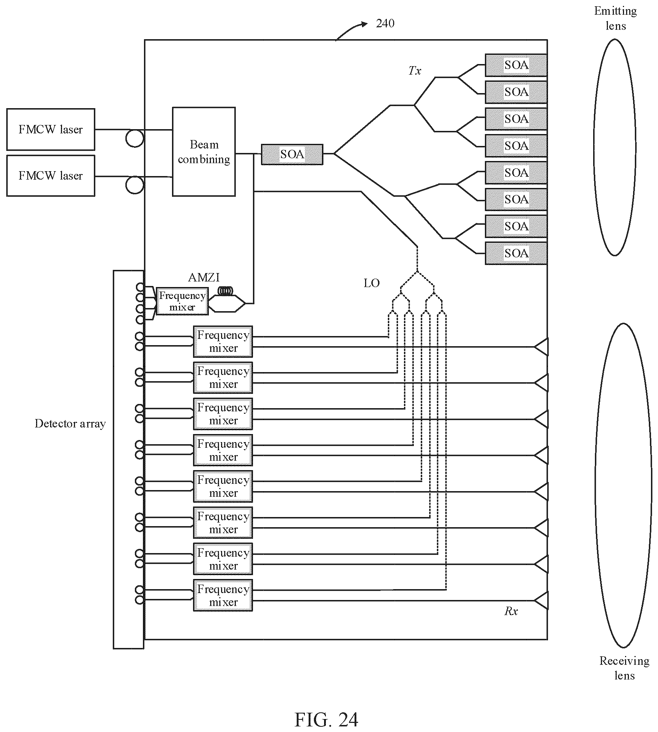

FIG. 24 is an application diagram of another optical signal processing apparatus according to an embodiment of this application. In FIG. 24, a first laser and a second laser have different properties. After beam combining is performed on signal light from the first laser and signal light from the second laser, the optical signal processing apparatus 240 outputs local oscillation signal light (LO) and feedback signal light (namely, signal light input into an AMZI).

When the LO and return signal light (Rx) are frequency-mixed, input local oscillation signal light of each frequency mixer includes both the signal light from the first laser and the signal light from the second laser. Correspondingly, beam splitting is not performed on one piece of return signal light received by a receiving unit, and beat frequency is directly performed on the local oscillation signal light on which beam combining is performed.

Further, an output signal obtained by the frequency mixer through beat frequency may be input into a detection unit (namely, a detector array). The detection unit may distinguish echo signals corresponding to different lasers based on different properties of light in the output signal. For example, the detection unit distinguishes echo signals of different frequencies by using different frequency sweep slopes.

For related descriptions of components, optical paths, and the like in the optical signal processing apparatus 230, refer to the descriptions in FIG. 21 or FIG. 22.

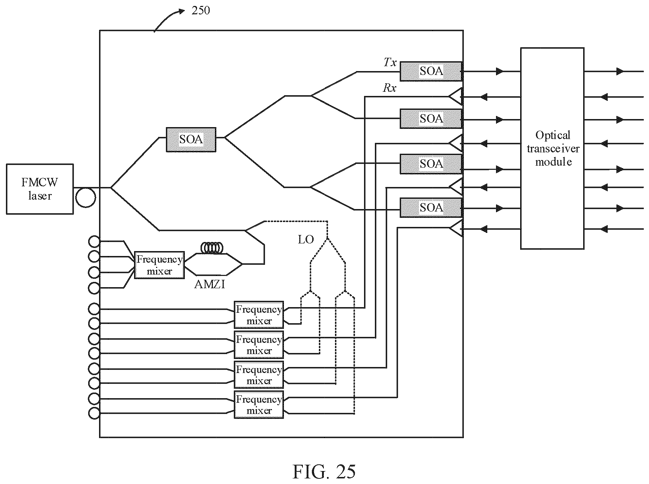

FIG. 25 is an application diagram of another optical signal processing apparatus according to an embodiment of this application. In the optical signal processing apparatus 250, output ports (for example, end faces of SOAs) and receiving ports are closely arranged. The output port and the receiving port may use a same optical lens. Optionally, for example, receiving and emitting may be coaxial or non-coaxial. For detailed descriptions, refer to the foregoing descriptions, for example, related descriptions in the embodiment in FIG. 10A, FIG. 22, or the like.

In addition, FIG. 25 is described by using a structure of a single light source as an example, and is also applicable to a structure of dual light sources.

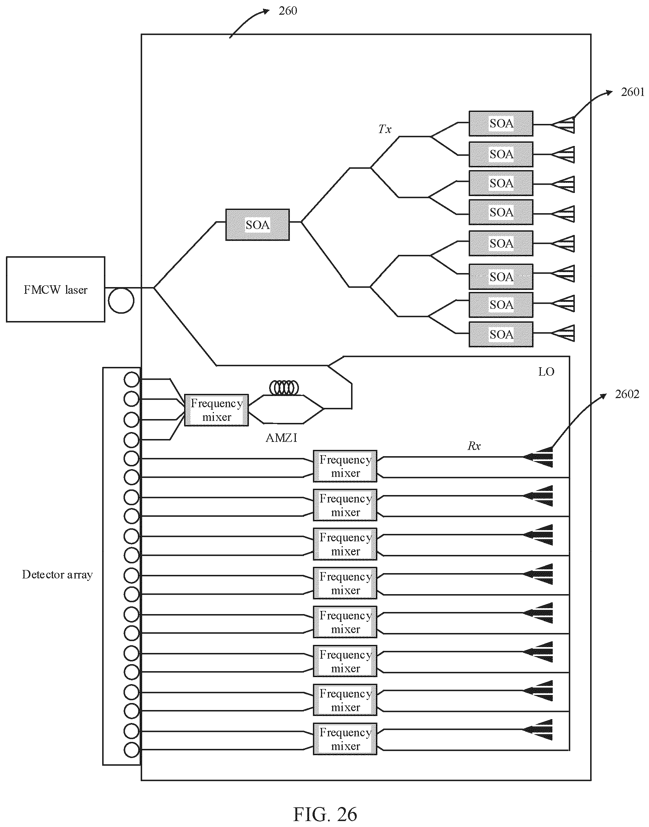

FIG. 26 is an application diagram of another optical signal processing apparatus according to an embodiment of this application. As shown in FIG. 26, a difference between the optical signal processing apparatus 260 and the optical signal processing apparatus 210 shown in FIG. 21 is that an output port of the optical signal processing apparatus 260 uses a surface-coupled grating coupler 2601.

Optionally, a receiving port of the optical signal processing apparatus 260 is provided by a receiving coupler 2602. In addition, local oscillation signal light bypasses the outside of the receiving coupler, to avoid cross generated between the local oscillation signal light and return signal light. This reduces crosstalk between signal light and improves signal effectiveness.

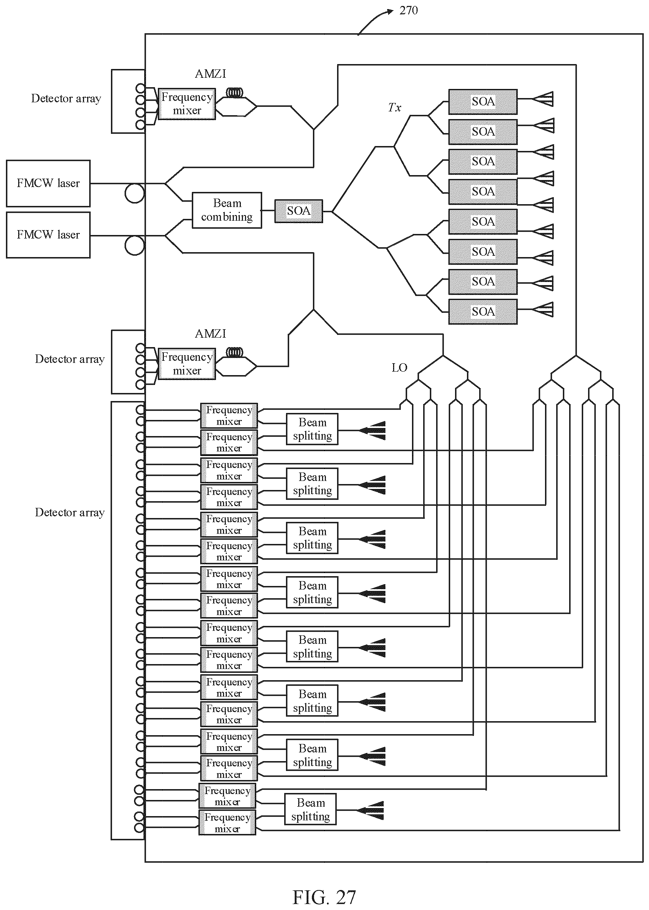

FIG. 27 is an application diagram of another optical signal processing apparatus according to an embodiment of this application. The optical signal processing apparatus 270 may perform hierarchical amplification on signal light from a plurality of lasers, to form a wiring harness array of a plurality of channels for emission. A receiving port is provided by a surface-coupled grating coupler, and the receiving port is provided by a receiving coupler. In addition, local oscillation signal light bypasses the outside of the grating coupler and the receiving coupler, to reduce cross between the local oscillation signal light and return signal light. This reduces crosstalk between signal light and improves signal effectiveness.

Optionally, a waveguide for propagating the local oscillation signal light and a waveguide for propagating an echo may be at a same layer, or may be conducted at different layers. For example, the waveguide for propagating the local oscillation signal light is at the first layer, and the waveguide for propagating the echo is at the second layer.

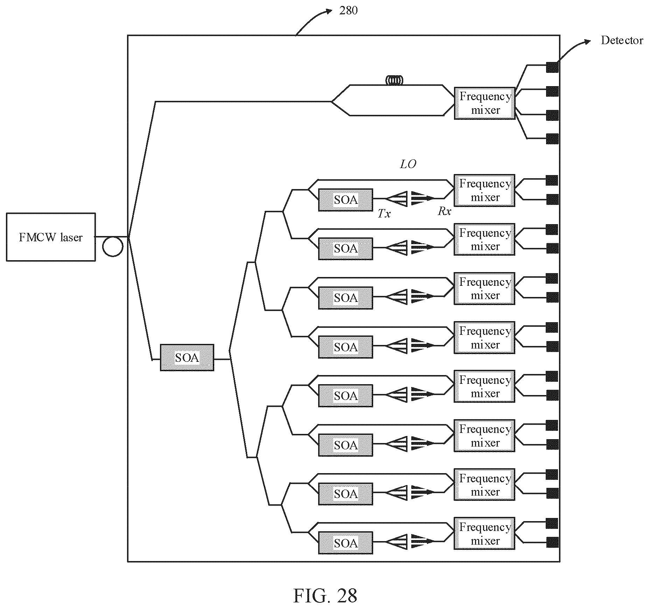

FIG. 28 is an application diagram of another optical signal processing apparatus according to an embodiment of this application.

Output ports and receiving ports of the optical signal processing apparatus 280 are closely and oppositely arranged, and are in one-to-one correspondence. Optionally, the receiving port and the output port may share one optical lens.

In the optical signal processing apparatus 280, each local oscillation (LO) signal may be output after a last-stage optical splitting unit (optionally before a last-stage SOA), and transmitted to a frequency mixer to be frequency-mixed with return signal light.

Optionally, a detection element may also be integrated into the optical signal processing apparatus 280.

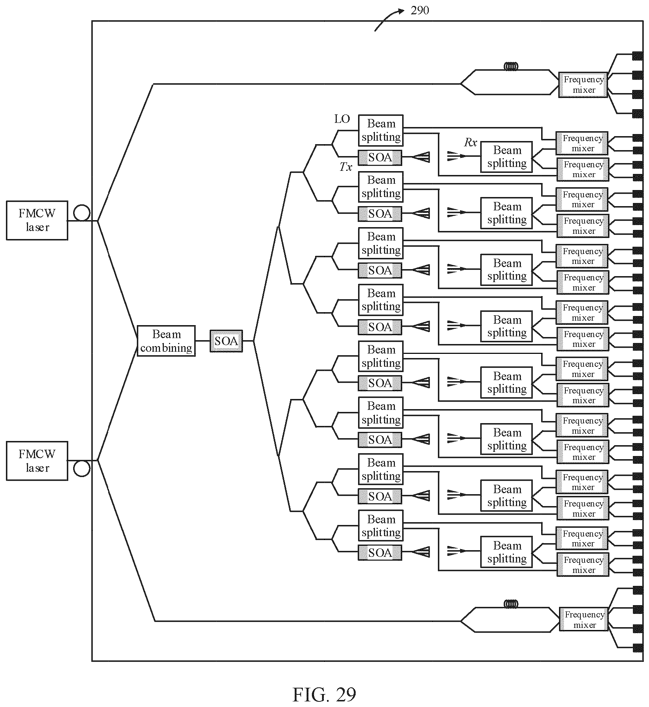

FIG. 29 is an application diagram of another optical signal processing apparatus according to an embodiment of this application.

The optical signal processing apparatus 290 may perform hierarchical amplification on optical signals from a plurality of lasers, to form a wiring harness array of a plurality of channels for emission.

In the optical signal processing apparatus 290, each path local oscillation LO signal may be output after a last-stage optical splitting unit (optionally before a last-stage SOA), and is beam-split to obtain two paths of sub local oscillation signals, and then the two paths of sub local oscillation signals are separately beam-split and frequency-mixed with a received echo. Correspondingly, return signal light is also beam-split to obtain two paths of sub return signals, and the two paths of sub return signals are respectively frequency-mixed with the two paths of sub local oscillation signals.

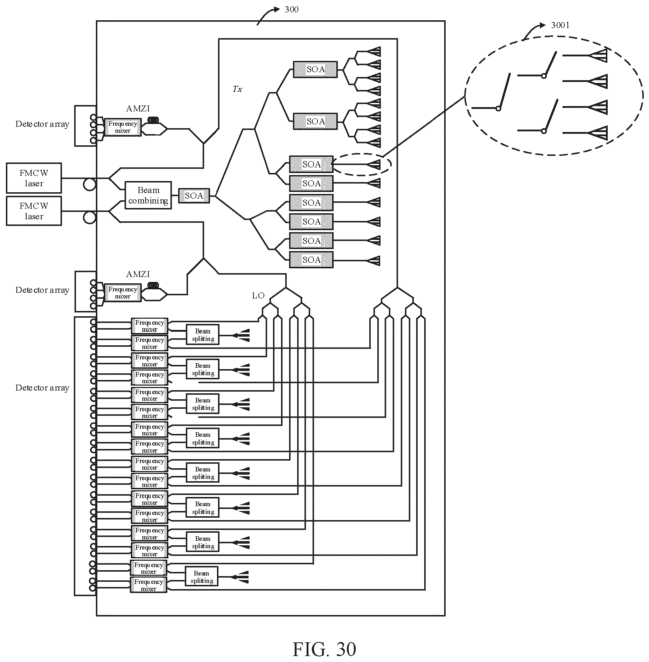

FIG. 30 is an application diagram of another optical signal processing apparatus according to an embodiment of this application.

In the optical signal processing apparatus 300, signal light amplified by a last-stage SOA may be further coupled into an optical waveguide; and after being beam-split by a beam splitter, the signal light is emitted from an output port as signals of a plurality of channels.

Optionally, the signal light that passes through the last-stage SOA may be optically split for a plurality of times after being coupled into the optical waveguide. Signal light output from different output ports may be optically split for different times, and quantities of emitting couplers obtained after optical splitting may also be different. Power of signal light output by each emitting coupler may also be different. The optical splitting herein may be implemented by an optical splitting device such as an MMI or a DC.

In another possible implementation, as shown in a region 3001, the signal light that passes through the last-stage SOA further passes through one or more optical switches after being optically split. The optical switch is configured to perform switching between several channels, and is configured to increase a quantity of emitting channels through time multiplexing. In addition, the emitting channel is switched by the optical switch, so that output optical power of each channel is similar to that before the optical switch.

**The foregoing describes the optical signal processing apparatus provided in embodiments of this application. In a specific implementation process, a plurality of optical signal processing apparatuses may be disposed in one device or chip. The following uses an example in which a plurality of groups of optical signal processing apparatuses are disposed in a chip for description.**

In a possible design, M optical signal processing apparatus groups are disposed in the chip, and each optical signal processing apparatus group may include one or more optical signal processing apparatuses. For the optical signal processing apparatus, refer to the foregoing descriptions. The chip may receive signal light from N lasers, and may gate one or more of M optical signal processing apparatus groups by using an optical switch tree, where M is an integer and M is greater than 1, and N is an integer and N is greater than 1.

For each optical signal processing apparatus group, one optical signal processing apparatus group may be enabled, by using the switch tree, to switchably receive signal light input by 0 to N lasers.

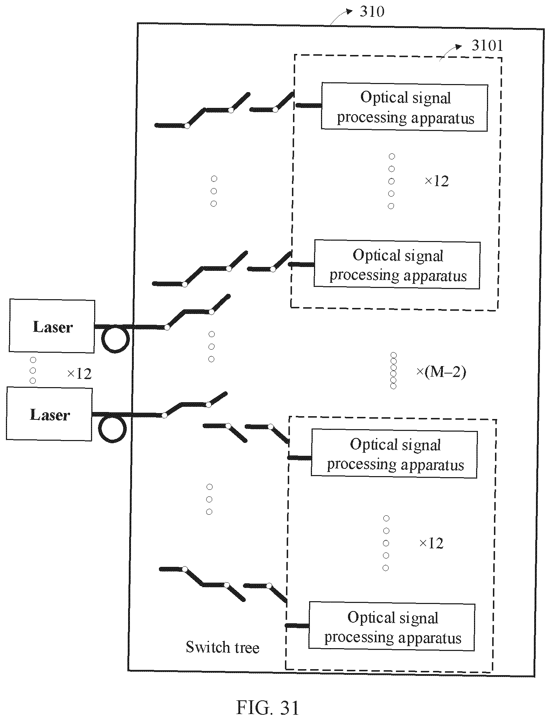

The following uses a silicon photonics chip of a silicon material as an example for description. FIG. 31 is a diagram of a possible silicon photonics chip according to an embodiment of this application. A quantity of lasers may be 14, and 12 lasers in the middle are omitted in FIG. 31. In the silicon photonics chip 310, there are M optical signal processing apparatus groups, and each optical signal processing apparatus group includes, for example, 14 optical signal processing apparatuses. A switch tree (switch tree) may be used to control a specific laser or specific lasers of which the optical signal processing apparatus group processes signal light. Further, a specific optical signal processing apparatus or specific optical signal processing apparatuses in the optical signal processing apparatus group may be further controlled to perform processing.

In another possible design, N groups of optical signal processing apparatuses are disposed in the silicon photonics chip. The N groups of optical signal processing apparatuses may be disposed opposite to each other. For example, every two optical signal processing apparatuses are disposed in an axisymmetric manner.

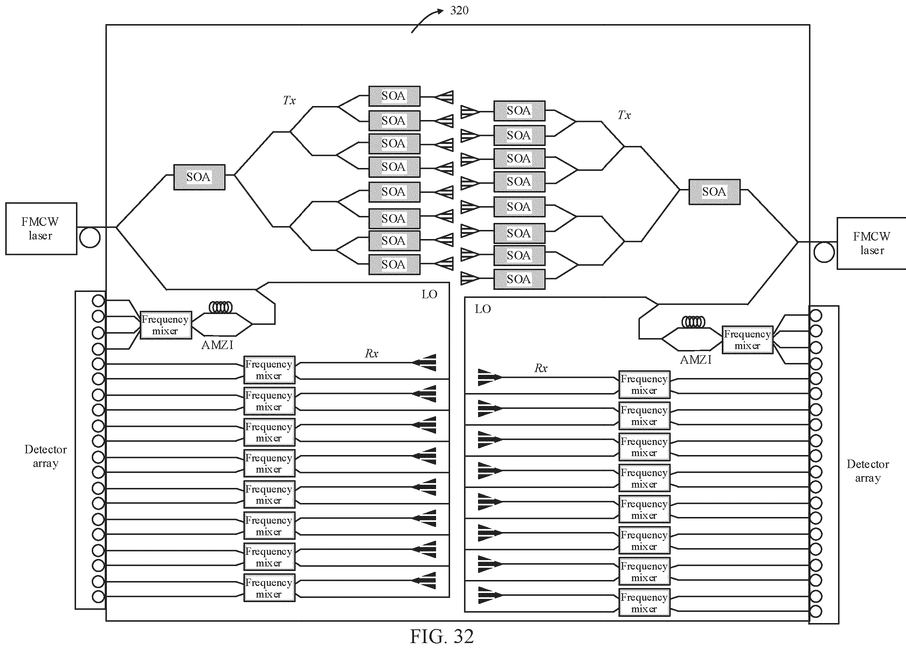

FIG. 32 is a diagram of another possible silicon photonics chip according to an embodiment of this application. The silicon photonics chip 320 includes two optical signal processing apparatuses disposed opposite to each other. The optical signal processing apparatus herein is described by using the optical signal processing apparatus shown in FIG. 26 as an example, and is also applicable to an optical signal processing apparatus in another implementation.

Certainly, a plurality of optical signal processing apparatuses may also be disposed in a multi-layer stacking manner in a vertical direction.

The foregoing describes structures of the optical signal processing apparatus and the silicon photonics chip. The following describes examples of working scenarios of the optical signal processing apparatus and the chip.

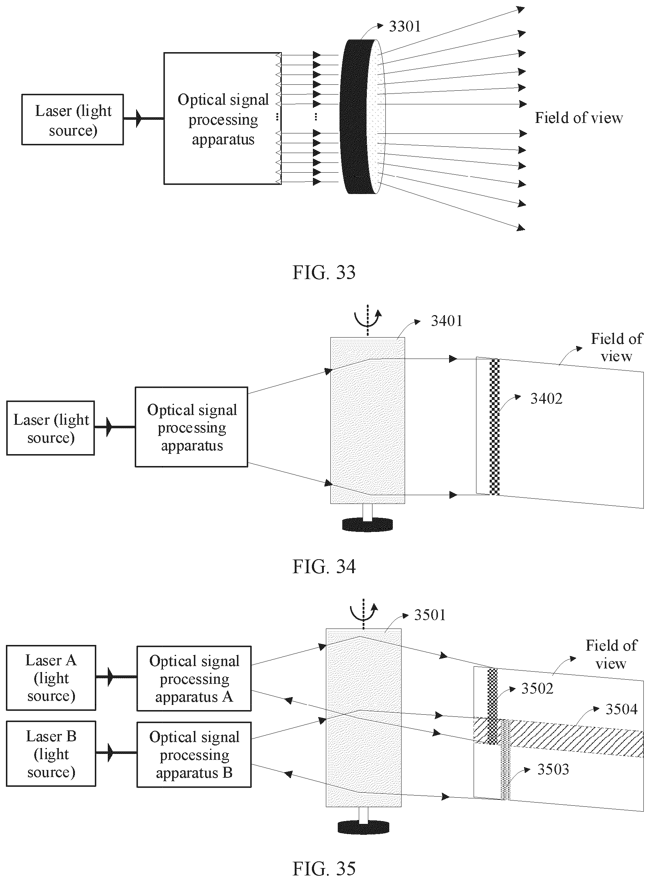

For example, FIG. 33 is a diagram of a working scenario of an optical signal processing apparatus according to an embodiment of this application. The optical signal processing apparatus may receive signal light from a light source (for example, a laser), and process the signal light to obtain a plurality of pieces of detection signal light (as shown by solid lines with arrows in the figure). The plurality of pieces of detection signal light are presented in a form of a wiring harness array, and are transmitted to a field of view through an optical module 3301. Each piece of detection signal light may correspond to one angle range of the field of view.

Further, the optical signal processing apparatus may further receive signal light from the field of view through the optical module 3301.

In FIG. 33, the optical module may include one or more optical elements. The optical element herein includes but is not limited to a lens, a reflector, a beam splitter, a grating, a wave plate, a diffuser, a scanning apparatus, or the like.

The scanning apparatus is configured to provide detection signal light to different angle ranges of the field of view at different angles. A scanning manner of the scanning apparatus may be one-dimensional or two-dimensional. The scanning manner and the scanning apparatus are not limited in this application. For example, the scanning apparatus may implement one-dimensional or two-dimensional scanning in a manner, for example, a galvanometer scanner, a rotator mirror (Polygon), a micro-electro-mechanical system (Micro-Electro-Mechanical System, MEMS) mirror, or a metal oscillating mirror.

For example, FIG. 34 is a diagram of a working scenario of another optical signal processing apparatus according to an embodiment of this application. The optical signal processing apparatus may receive signal light from a light source (for example, a laser), and process the signal light to obtain a plurality of pieces of detection signal light (as shown by solid lines with arrows in the figure). The plurality of pieces of detection signal light are presented in a form of a wiring harness array, and are emitted to a field of view at a specific angle through a scanning apparatus 3401. For example, at a specific moment, signal light processed by the optical signal processing apparatus is irradiated to a region 3402 in the field of view. The angle of the scanner is changed, so that the signal light can be used to scan the field of view.

In some scenarios, an output port of the optical signal processing apparatus is designed, so that requirements for detection resolutions of different regions in the field of view can be met. Alternatively, a plurality of optical signal processing apparatuses are combined, so that detection resolutions of different regions in the field of view can be designed.

For example, FIG. 35 is a diagram of a working scenario of another optical signal processing apparatus according to an embodiment of this application. An optical signal processing apparatus A receives signal light from a laser A, processes the signal light to obtain a plurality of pieces of detection signal light, and irradiates the plurality of pieces of detection signal light to a region 3502 in a field of view through a scanning apparatus 3501. Similarly, an optical signal processing apparatus B receives signal light from a laser B, processes the signal light to obtain a plurality of pieces of detection signal light, and irradiates the plurality of pieces of detection signal light to a region 3503 in the field of view through the scanning apparatus 3501. The detection signal light obtained by the two optical signal processing apparatuses through processing forms an overlapping region 3504 in a middle region of the field of view, so that a detection result of the overlapping region 3504 has a higher resolution.

Certainly, in a specific implementation process, more resolution designs may be implemented through more optical signal processing apparatuses. Details are not enumerated herein again.

**The following describes the detection apparatus provided in this embodiment of this application.**

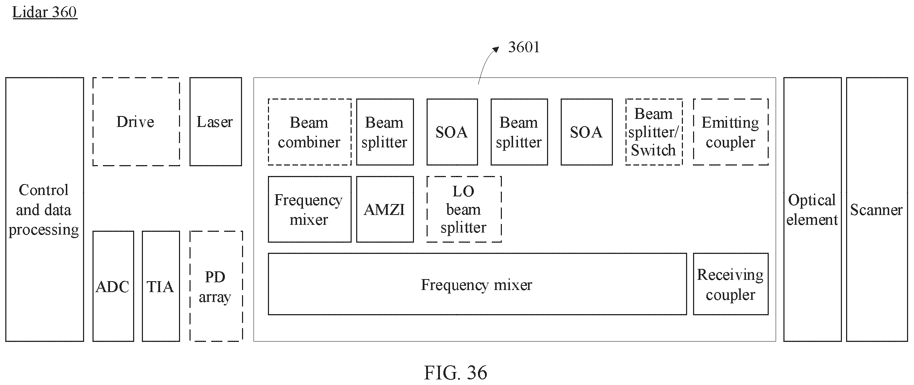

FIG. 36 is a diagram of a structure of a possible lidar according to an embodiment of this application. The lidar 360 includes a laser (or referred to as a laser) and an optical signal processing apparatus 3601.

The optical signal processing apparatus 3601 may include one or more of a plurality of beam splitters, a multi-stage SOA, a receiving coupler, a frequency mixer, an AMZI, or the like, for example, units represented by solid lines in the optical signal processing apparatus 3601. The beam splitter may include an LO beam splitter configured to perform beam splitting on LO.

Optionally, the optical signal processing apparatus 3601 further includes an emitting coupler, a switch (for example, an optical switch), a beam combiner, or the like, for example, units represented by dashed lines in the optical signal processing apparatus 3601. For descriptions of the optical signal processing apparatus 3601, refer to the foregoing descriptions. Details are not enumerated herein again.

In some scenarios, the lidar may further include one or more of a laser, a detector array, an analog digital converter (analog digital converter, ADC), a trans-impedance amplifier (trans-impedance amplifier, TIA), a drive (for example, a laser drive), a control and data processing module, an optical device (which includes a scanner), or the like. The foregoing one or more modules may be implemented through a circuit. For example, the ADC may also be a sampling circuit, and the TIA may be an amplification circuit. There may be one or more modules. For example, there may be a plurality of lasers.

The following describes functions of some components in the lidar 360.

The laser is configured to generate signal light, and the signal light may be provided for the optical signal processing apparatus. For example, the laser may include a semiconductor laser, an optical fiber laser, a gas laser, or the like. The semiconductor laser may include but is not limited to a laser diode (laser diode, LD), a vertical-cavity surface-emitting laser (Vertical-Cavity Surface-Emitting Laser, VCSEL), an edge-emitting laser (edge-emitting laser, EEL), a distributed feedback laser (distributed feedback LD, DFB-LD), a distributed brag reflection laser (distributed brag reflection LD, DBR-LD), a grating coupled sampling reflection laser (Grating coupled sampling reflection LD, GCSR-LD), a micro opto-electro mechanical system laser (micro optical electro mechanical system LD, MOEMS-LD), or the like.

The scanner is configured to: project the signal light from the optical signal processing apparatus into a field of view at a plurality of angles, receive signal light from the field of view, and provide the signal light for the optical signal processing apparatus. Refer to optical paths shown in FIG. 35 and FIG. 36.

The optical device is configured to implement an optical path design, for example, one or more of convergence, collimation, shaping, reflection, scanning, coaxial transmission and reception, or the like. The optical device includes but is not limited to a shaping device (for example, a collimation apparatus or an optical path shaping device), a reflector, a lens, a window, an optical splitting mirror, a galvanometer scanner, a rotator mirror (Polygon), or a micro-electro-mechanical system (Micro-Electro-Mechanical System, MEMS) mirror, a beam splitting mirror, a polarizer, a light filter, a diffuser, or the like.

The array detector is configured to: receive one or more frequency mixing results from the optical signal processing apparatus, and obtain an electrical signal based on the one or more frequency mixing results, where the electrical signal is used to determine related information of a target in the field of view. The array detector may include one or more detection elements. For example, the array detector may include one or more of the following detection elements: a single-photon avalanche diode (single-photon avalanche diode, SPAD), a silicon photomultiplier (Silicon photomultiplier, SiPM), a semiconductor avalanche photodiode (avalanche photo detector, APD), a multi-pixel photon counter (multi-pixel photon counter, MPPC), an electron multiplying charge-coupled device (electron multiplying charge-coupled device, EMCCD), or the like.

The control and data processing module is configured to generate a control signal and/or process data. For example, the control and data processing module includes a power controller, configured to control an SOA drive current. For another example, the control and data processing module is configured to process the electrical signal to obtain the related information of the target.

In some scenarios, the control and data processing module may be implemented by a processor and/or a controller. For example, the control and data processing module includes one or more of the following devices: a central processing unit (central processing unit, CPU), an application processor (application processor, AP), a time-to-digital converter (Time-to-Digital Converter, TDC), a filter, a graphics processing unit (graphics processing unit, GPU), a microprocessor unit (microprocessor unit, MPU), an application-specific integrated circuit (Application-Specific Integrated Circuit, ASIC), a TIA, an image signal processor (image signal processor, ISP), a digital signal processor (digital signal processor, DSP), a field programmable gate array (Field Programmable Gate Array, FPGA), a complex programmable logic device (Complex programmable logic device, CPLD), a coprocessor (assisting a central processing unit in completing corresponding processing and application), a microcontroller unit (Microcontroller Unit, MCU), a neural-network processing unit (neural-network processing unit, NPU), and/or the like.

Optionally, when the control and data processing module shown in FIG. 35 includes a plurality of modules, some modules may be disposed outside the lidar, and some modules are disposed inside the lidar.

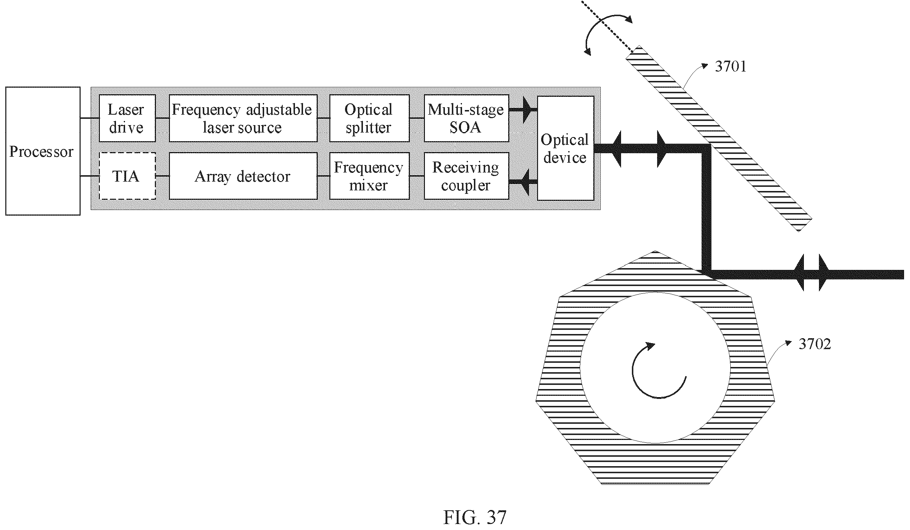

FIG. 37 is a diagram of a working scenario of a lidar according to an embodiment of this application. After being optically split and amplified (implemented by an optical signal processing apparatus), FMCW signal light generated by a laser is irradiated to a field of view through an optical device and a scanner (for example, a galvanometer scanner 3701 and a rotator mirror 3702). The signal light irradiated to the field of view may be reflected by a target in the field of view, to form return signal light. The return signal light then passes through the scanner and the optical device, and arrives at the optical signal processing apparatus. The optical signal processing apparatus receives the signal light into an optical waveguide through a receiving port, and processes the signal light to obtain one or more frequency mixing results. The frequency mixing result is provided for the detector array, and an electrical signal is output. Optionally, the electrical signal may be input into a controller and/or a processor, for example, input into a module such as a TIA, an ADC, or an application-specific integrated circuit (application-specific integrated circuit, ASIC).

Further, the processor may complete processing on the electrical signal and/or control on one or more components in a lidar. For example, the processor may further process the electrical signal to obtain detection data that reflects related information of the target. The pieces of detection data may be specifically point cloud data corresponding to the field of view, or the detection data may include one or more of a distance, an orientation, a pixel region occupied by the target, a height, a speed, a posture, shape information, or the like of the target in the field of view.

Optionally, one or more components in a gray box in FIG. 37 may be integrated into one module. For example, one detection module is obtained through BOX encapsulation.

An embodiment of this application further provides a terminal. The terminal includes the foregoing optical signal processing apparatus, or includes the foregoing silicon photonics chip, or includes the foregoing lidar. Optionally, the foregoing terminal may include a mobile platform or a transportation tool such as a vehicle, a ship, an airplane, a train, a spacecraft, an uncrewed aerial vehicle, or a robot.

Embodiments of this application may be further applied to the field of intelligent vehicle technologies, for example, vehicle to everything (vehicle to everything, V2X), a long term evolution technology for workshop communication (Long Term Evolution-vehicle, LTE-V), or a vehicle to vehicle (vehicle to vehicle, V2V).

In the descriptions of this application, the terms "center", "upper", "lower", "vertical", "horizontal", "inside", "outside", and the like are orientation or location relationships based on the accompanying drawings, and are merely intended for ease of describing this application and simplifying description, but does not indicate or imply that a described apparatus or element needs to have a specific orientation or needs to be construed and operated in a specific orientation. Therefore, such terms should not be understood as a limitation on this application.

In embodiments of this application, the term such as "example" or "for example" represents giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may represent the following: a, b, c, (a and b), (a and c), (b and c), or (a, b, and c), where a, b, and c may be singular or plural. The term "and/or" describes an association between associated objects, and represents that three relationships may exist. For example, A and/or B may represent the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first signal light and second signal light are merely for ease of description, and do not indicate differences in sources, sequences, importance, and the like of the first signal light and the second signal light. In some embodiments, the first signal light and the second signal light may also be same signal light.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

## Claims

1. An optical signal processing apparatus, comprising at least one input port, a first beam splitting unit, a second beam splitting unit, and M stages of amplification units, wherein M is an integer and M≥2;
the at least one input port is configured to receive signal light from at least one laser;
the first beam splitting unit is configured to split the signal light from the at least one laser into a plurality of pieces of sub signal light;
a first-stage amplification unit in the M stages of amplification units is configured to amplify one of the plurality of pieces of sub signal light to generate first signal light;
the second beam splitting unit is configured to split the first signal light into a plurality of pieces of second signal light; and
a second-stage amplification unit in the M stages of amplification units is configured to amplify at least one of the plurality of pieces of second signal light to generate third signal light.

2. The optical signal processing apparatus according to claim 1, wherein the plurality of pieces of sub signal light comprise local oscillation signal light and detection signal light; and
the first-stage amplification unit is configured to amplify the detection signal light to generate the first signal light.

3. The optical signal processing apparatus according to claim 1, wherein the optical signal processing apparatus further comprises a beam combining unit, and the at least one input port comprises a first input port and a second input port;
the first input port is configured to receive signal light from a first laser;
the second input port is configured to receive signal light from a second laser;
the first beam splitting unit is configured to split the signal light from the first laser into a plurality of pieces of fourth signal light, and split the signal light from the second laser into a plurality of pieces of fifth signal light, wherein the plurality of pieces of fourth signal light and the plurality of pieces of fifth signal light belong to the plurality of pieces of sub signal light;
the beam combining unit is configured to combine at least one piece of fourth signal light and at least one piece of fifth signal light to obtain sixth signal light; and
the first-stage amplification unit is configured to amplify the sixth signal light to generate the first signal light.

4. The optical signal processing apparatus according to claim 1, wherein the optical signal processing apparatus further comprises a beam combining unit, and the at least one input port comprises a first input port and a second input port;
the first input port is configured to receive signal light from a first laser, and the second input port is configured to receive signal light from a second laser;
the beam combining unit is configured to perform beam combining on the signal light from the first laser and the signal light from the second laser to obtain seventh signal light;
the first beam splitting unit is configured to perform beam splitting on the seventh signal light to obtain the plurality of pieces of sub signal light, wherein the plurality of pieces of sub signal light comprise local oscillation signal light and detection signal light; and
the first-stage amplification unit is configured to amplify the detection signal light to generate the first signal light.

5. The optical signal processing apparatus according to claim 3 or 4, wherein the signal light from the first laser and the signal light from the second laser have different frequency sweep slopes, and/or
have different center wavelengths.

6. The optical signal processing apparatus according to any one of claims 1 to 5, wherein the second beam splitting unit comprises N beam splitters, the N beam splitters are arranged in a tree topology, each beam splitter is used as a node of the tree topology, N is an integer and N>0, and signal light obtained through beam splitting by a beam splitter at each parent node location is provided for a beam splitter at a child node location; and
the first signal light is input into a beam splitter at a root node location, and the plurality of pieces of second signal light are output from a beam splitter at a leaf node location.

7. The optical signal processing apparatus according to claim 6, wherein the second-stage amplification unit comprises a plurality of amplifiers;
the plurality of amplifiers are located after the beam splitter at the leaf node location; or
the plurality of amplifiers are located between beam splitters in the plurality of tree topologies; or
in the plurality of amplifiers, a part of amplifiers are located after the beam splitter at the leaf node location, and another part of amplifiers are located between beam splitters in the plurality of tree topologies.

8. The optical signal processing apparatus according to any one of claims 1 to 7, wherein the optical signal processing apparatus further comprises a power controller, and the power controller is configured to adjust a drive current of the second-stage amplification unit, to control power of signal light output by the second-stage amplification unit.

9. The optical signal processing apparatus according to claim 8, wherein the power controller is further configured to:
adjust the drive current of the second-stage amplification unit based on a control signal from a processor, wherein the control signal is related to a pointing angle of a scanner.

10. The optical signal processing apparatus according to any one of claims 1 to 9, wherein the optical signal processing apparatus further comprises an optical input/output unit, and the optical input/output unit comprises a plurality of output ports, a plurality of receiving ports, and a frequency mixing unit;
the plurality of output ports are configured to emit the third signal light;
the plurality of receiving ports are configured to receive return signal light, wherein the return signal light comprises reflection of the third signal light;
the frequency mixing unit is configured to obtain one or more frequency mixing results based on the return signal light and the local oscillation signal light, wherein the one or more frequency mixing results are used to determine related information of a target in a field of view; and
the local oscillation signal light belongs to the plurality of pieces of sub signal light, or belongs to the plurality of pieces of second signal light.

11. The optical signal processing apparatus according to claim 10, wherein the frequency mixing unit comprises a third beam splitting unit, a first frequency mixer, and a second frequency mixer;
the third beam splitting unit is configured to perform beam splitting on the return signal light, to obtain first sub return signal light and second sub return signal light;
the first frequency mixer is configured to perform frequency mixing on first sub local oscillation signal light and the first sub return signal light to obtain a first frequency mixing result, wherein the first sub local oscillation signal light is from the first laser; and
the second frequency mixer is configured to perform frequency mixing on a second sub local oscillation signal and the second sub return signal light to obtain a second frequency mixing result, wherein the second sub local oscillation signal light is from the second laser.

12. The optical signal processing apparatus according to claim 11, wherein the optical signal processing apparatus further comprises a fourth beam splitting unit, the fourth beam splitting unit is configured to demultiplex the local oscillation signal light to obtain the first sub local oscillation signal light and the second sub local oscillation signal light, wherein the first sub local oscillation signal light is used as a local oscillation signal of the signal light from the first laser, and the second sub local oscillation signal light is used as a local oscillation signal of the signal light from the second laser; and
the local oscillation signal light comprises the signal light from the first laser and the signal light from the second laser.

13. The optical signal processing apparatus according to any one of claims 1 to 12, wherein
the plurality of receiving ports are arranged by column to form a receiving port group, the plurality of output ports are arranged by column to form an output port group, the receiving port group and the output port group are disposed opposite to each other, and one output port and at least one receiving port are disposed opposite to each other and share one optical transceiver module; or
the plurality of receiving ports are arranged by column to form a receiving port group, and the plurality of output ports are arranged by column to form an output port group; and
the receiving port group shares one optical receiving module, and the output port group shares one optical emitting module.

14. The optical signal processing apparatus according to claim 10 or 11, wherein the plurality of receiving ports comprise a first receiving port, the output ports comprise a first output port, and signal light received by the first receiving port comprises reflection of signal light output by the first output port; and
the optical signal processing apparatus further comprises the power controller, and the power controller is configured to:
when power of the signal light received by the first receiving port is greater than a first threshold, reduce the drive current of the second-stage amplification unit to reduce power of detection signal light emitted by the first output port; or
when power of the signal light received by the first receiving port is less than a second threshold, increase the drive current of the second-stage amplification unit to increase power of detection signal light emitted by a first emitting subport.

15. The optical signal processing apparatus according to claim 10 or 11, wherein the optical input/output unit comprises a first output port set and a second output port set, the first output port set and the second output port set each comprise at least one output port, the first output port set is configured to emit detection signal light to a middle region of the field of view, and the second output port set is configured to emit detection signal light to an edge region of the field of view; and
power of the detection signal light emitted by the first output port set is higher than power of the detection signal light emitted by the second output port set.

16. The optical signal processing apparatus according to any one of claims 10 to 15, wherein the optical signal processing apparatus further comprises an optical switch, and the optical switch is disposed between the second beam splitting unit and any output port, and is configured to control whether to form an optical path between the second beam splitting unit and the any output port.

17. The optical signal processing apparatus according to any one of claims 10 to 16, wherein the optical signal processing apparatus further comprises a feedback unit, and the plurality of pieces of sub signal light comprise feedback signal light; and
the feedback unit is configured to detect, based on the feedback signal, frequency sweep information and/or phase noise of the signal light from the at least one laser.

18. The optical signal processing apparatus according to any one of claims 1 to 17, wherein the optical signal processing apparatus further comprises a multi-layer substrate and a plurality of waveguides, and the plurality of waveguides are configured to form, at different layers of the substrate, optical paths for transmitting signal light.

19. A chip, comprising K optical signal processing apparatuses according to any one of claims 1 to 18, wherein K is an integer and K≥1.

20. The chip according to claim 19, wherein the chip further comprises at least one laser input port and at least one optical switch, and the at least one laser input port comprises a first laser input port;
the at least one laser input port is configured to receive signal light from at least one laser; and
the at least one optical switch is disposed between the first laser input port and L optical signal processing apparatuses, and is configured to: switchably couple the L optical signal processing apparatuses to optical paths, to control whether to form optical paths between the L optical signal processing apparatuses and the first laser input port, wherein L is an integer and L≤K.

21. The chip according to claim 19, wherein K is an even number and K≥2, and any two of the K optical signal processing apparatuses are symmetrically disposed.

22. A lidar, wherein the lidar comprises a laser, a scanner, and the optical signal processing apparatus according to any one of claims 1 to 18;
the laser is configured to provide frequency modulated signal light for the optical signal processing apparatus; and
the scanner is configured to project third signal light from the optical signal processing apparatus into a field of view.

23. A lidar, wherein the lidar comprises a laser, an array detector, an optical transceiver module, a scanner, and the optical signal processing apparatus according to any one of claims 10 to 17;
the laser is configured to provide frequency modulated signal light for the optical signal processing apparatus;
the scanner is configured to: project third signal light from the optical signal processing apparatus into a field of view, receive return signal light from the field of view, and provide the return signal light for the optical signal processing apparatus;
the optical transceiver module is disposed between the scanner and the optical signal processing apparatus; and
the array detector is configured to: receive one or more frequency mixing results from the optical signal processing apparatus, and obtain an electrical signal based on the one or more frequency mixing results, wherein the electrical signal is used to determine related information of a target in the field of view.

24. The lidar according to claim 23, wherein the optical module comprises a polarization beam splitter and a quarter wave plate, and the polarization beam splitter and the quarter wave plate are configured to implement coaxial transmission and reception;
the third signal light sequentially passes through an output port of the optical signal processing apparatus, the polarization beam splitter, and the quarter wave plate, and is provided for the scanner; and
return signal light from the scanner sequentially passes through the quarter wave plate and the polarization beam splitter, and is provided for a receiving port of the optical signal processing apparatus.

25. The lidar according to claim 24, wherein the optical module further comprises a half wave plate, and the half wave plate is disposed between the polarization beam splitter and the receiving port of the optical signal processing apparatus.

26. A terminal, wherein the terminal comprises the optical signal processing apparatus according to any one of claims 1 to 18, or
comprises the chip according to any one of claims 19 to 21, or
comprises the lidar according to claim 22, or
comprises the lidar according to any one of claims 23 to 25.

27. The terminal according to claim 26, wherein the terminal is a vehicle, an uncrewed aerial vehicle, or a robot.
